# EUROPEAN PATENT APPLICATION

(11) **EP 3 739 028 A1**
(43) Date of publication of application: **18.11.2020**
(21) Application number: 19760842.5
(22) Date of filing: 26.02.2019
(51) Int. Cl.: C11B 15/00, A23D 7/02, A23D 9/02

(54) **SOLID-OIL-AND-FAT-CONTAINING COMPOSITION, METHOD FOR PRODUCING SAME, METHOD FOR ADJUSTING PHYSICAL PROPERTIES OF SAME, AND OIL-AND-FAT HARDENING AGENT**

(30) Priority: 28.02.2018 JP 2018034400
(71) Applicant: Mizkan Holdings Co., Ltd., Handa-shi, Aichi 475-8585 (JP)
(72) Inventor: TAGUCHI, Hideaki, Handa-shi, Aichi 475-8585 (JP)
(74) Representative: Mewburn Ellis LLP
(86) International application number: PCT/JP2019/007362
(87) International publication number: WO 2019/167961

(57) **Abstract**

Provided is an easy and efficient technique for obtaining a solid-oil-and-fat-containing composition by solidifying, without separating, a liquid oil-and-fat mixture composed of a solid fat and a liquid oil. A liquid oil-and-fat mixture containing a solid fat and a liquid oil is hardened in the presence of an oil-and-fat hardening agent containing cellulose.

## Description

### TECHNICAL FIELD

The present invention relates to a method for producing a solid oil-and-fat-containing composition containing a solid fat and a liquid oil, an oil-and-fat hardening agent for use in the method, a solid oil-and-fat-containing composition obtainable via the method, and a method of adjusting a property of such a solid oil-and-fat-containing composition.

### BACKGROUND ART

Fats and oils include solid fats, which are semisolid to solid at room temperature, and liquid oils, which are liquid at room temperature. These are used for different purposes depending on their melting points. An example of solid fats is cocoa butter, which is suitable for solid foods and is used for a food such as chocolate. An example of liquid oils is rapeseed oil, which is used as a stir-fry oil for cooking due to its good dispersibility.

In recent years, palm oil, which is a solid fat, has been shunned on such a ground that its increasing demand accelerates the destruction of tropical rainforests, and its alternatives have been desired. However, since natural solid fats that can substitute for palm oil are limited in their variety and production amounts, solid fats converted from liquid oils (hardened oils) via chemical hydrogenation treatment have mainly been used. However, this easy alternative means also has its limits, since the conversion process of liquid oils into solid fats by hydrogenation generates trans fatty acids as by-products, which have been found to pose a risk to the human health.

In addition, solid fats from natural sources are limited in their variety, and tend to have a strong unique flavor as compared to liquid oils in general, and also to change their properties when molten or re-hardened. Such unique flavors and changing properties (their general properties and/or their local properties affected by hard coarse crystals of fats and oils) of natural solid fats significantly limit their usability.

On the other hand, liquid oils are far more diverse than solid fats, and some liquid oils such as olive oil and fish oil are known to contain health functional ingredients, and may sometimes be encapsulated and served as a supplement. However, since such encapsulation requires a special processing technique and increases the cost, there has been a demand for a technique that makes such liquid oils into a solid state so that they can be handled more easily.

Thus, both the solid fats and the liquid oils have their own problems. However, if there is a technique which makes it possible to mix a solid fat with a liquid oil and solidify them together while controlling the flavor and properties of the mixture, it will then become possible to reduce the amount of the solid fat to be used while utilizing the variety of liquid oil types, whereby such oil-and-fat mixtures will have an expanded versatility and will become applicable to various products.

In view of similar problems, Patent Document 1 discloses an oil-and-fat hardening agent containing cyclodextrin and polysaccharides, a hardened oil substitute prepared by hardening an oil and a fat using this oil-and-fat hardening agent, and a food product using the hardened oil substitute. However, the hydrogenated oil substitute described in this document liquefies at a temperature of from about 60 to 70°C, which is much higher than the melting points of know natural solid fats, which are in a range of from about 10 to 50°C. Due to the high melting point, the hydrogenated oil substitute of this document is difficult to handle and lacks versatility.

Patent Document 1 describes that at least one or more of polysaccharides can be used as a hardening agent for liquid oils, such as cyclodextrin, agar, low-strength agar, κ carrageenan, ι carrageenan, λ carrageenan, furceleran, sodium alginate, cassia gum, guar gum, guar gum decomposition product, locust bean gum, tara gum, fenugreek gum, tamarind gum, glucomannan, pectin, xanthan gum, heat-treated xanthan gum, gellan gum, native gellan gum, curdlan, starch, and modified starch. However, cyclodextrin is not only costly but also needs to be combined with other materials. Furthermore, the method used for hardening a fat and an oil in the examples of this document required a complicated process including: dissolving the oil-and-fat hardening agent into water under heating; adding the aqueous solution to the fat and oil, and stirring and homogenizing the mixture of aqueous phase and oil phase, which are difficult to mix, vigorously with a high-speed stirrer.

### CITATION LIST

### PATENT DOCUMENTS

Patent Document 1: JP2008-285595A

### SUMMARY OF INVENTION

### TECHNICAL PROBLEM

An objective of the present invention is to provide a simple and efficient technique for obtaining a solid oil-and-fat-containing composition by solidifying a liquid oil-and-fat mixture containing a solid fat and a liquid oil without separating the oil from the fat.

### SOLUTION TO PROBLEM

The present inventors have conducted earnest studies in view of the above circumstances and, as a result, have arrived at the following findings: if cellulose is used as an oil-and-fat hardening agent and added to a liquid oil-and-fat mixture of a solid fat and a liquid oil, the solid fat and the liquid oil are hardened without separating from each other to thereby yield a solid oil-and-fat-containing composition easily and efficiently. The present inventors have thus found that the above problems could thus easily be solved, and arrived at the present invention.

Some aspects of the present invention relate to the following:
[1] A method of producing a solid oil-and-fat-containing composition comprising a solid fat, which is solid at a specific temperature within a range of from -20°C to 40°C, and a liquid oil, which is liquid at the specific temperature, comprising: hardening a liquid oil-and-fat mixture containing the solid fat and the liquid oil in the presence of an oil-and-fat hardening agent containing cellulose.
[2] The method of [1] wherein the lower limit of the specific temperature is -10°C or more.
[3] The method of [2] wherein the lower limit of the specific temperature is -5°C or more.
[4] The method of any one of [1] to [3] wherein the upper limit of the specific temperature is 30°C or less.
[5] The method of [4] wherein the upper limit of the specific temperature is 25°C or less.
[6] The method of any one of [1] to [5] wherein the hardening of the liquid oil-and-fat mixture includes adding the oil-and-fat hardening agent liquefied under heating to the liquid oil-and-fat mixture, followed by cooling.
[7] The method of any one of [1] to [6] wherein the percentage of the solid fat relative to the total amount of the solid fat and the liquid oil is between 5% by mass and 100% by mass, inclusive.
[8] The method of [7] wherein the lower limit of the percentage of the solid fat is 10% by mass or more.
[9] The method of [8] wherein the lower limit of the percentage of the solid fat is 15% by mass or more.
[10] The method of [9] wherein the lower limit of the percentage of the solid fat is 20% by mass or more.
[11] The method of any one of [7] to [10] wherein the upper limit of the percentage of the solid fat is 95% by mass or less.
[12] The method of [11] wherein the upper limit of the percentage of the solid fat is 90% by mass or less.
[13] The method of any one of [1] to [12] wherein the percentage of the cellulose relative to the total amount of the solid fat and the liquid oil is between 2% by mass and 35% by mass, inclusive.
[14] The method of [13] wherein the lower limit of the percentage of the cellulose is 2.5% by mass or more.
[15] The method of [14] wherein the lower limit of the percentage of the cellulose is 3% by mass or more.
[16] The method of any one of [13] to [15] wherein the upper limit of the percentage of the cellulose is 32.5% by mass or less.
[17] The method of [16] wherein the upper limit of the percentage of the cellulose is 30% by mass or less.
[18] An oil-and-fat hardening agent containing cellulose for use in a method of any one of [1] to [17].
[19] The oil-and-fat hardening agent of [18] wherein the average particle diameter of the cellulose is 0.3µm or more and 400µm or less.
[20] The oil-and-fat hardening agent of [19] wherein the lower limit of the average particle diameter of the cellulose is 0.5µm or more.
[21] The oil-and-fat hardening agent of [20] wherein the lower limit of the average particle diameter of the cellulose is 1.0µm or more.
[22] The oil-and-fat hardening agent of any one of [19] to [21] wherein the upper limit of the average particle diameter of the cellulose is 250µm or less.
[23] The oil-and-fat hardening agent of [22] wherein the upper limit of the average particle diameter of the cellulose is 100µm or less.
[24] The oil-and-fat hardening agent of any one of [18] to [23] wherein the cellulose is derived from a cellulose-containing natural material.
[25] The oil-and-fat hardening agent of [24] wherein the natural material is one or more selected from microorganisms, bacteria, and plants.
[26] The oil-and-fat hardening agent of [25] wherein the plant comprises one or more selected from corn, soybean (edamame), pea (green pea), carrot, pumpkin, kale, paprika, beet, broccoli, spinach, tomato and sweet potato.
[27] The oil-and-fat hardening agent of [26] comprising a non-edible portion of the plant.
[28] The oil-and-fat hardening agent of any one of [25] to [27] comprising an edible portion and a non-edible portion derived from the same kind of plant.
[29] The oil-and-fat hardening agent of [27] or [28] wherein the non-edible portion comprises one or more selected from corn bract or pistil or cob, soybean (edamame) pod, pea (green pea) pod, carrot root tip or petiole base, pumpkin pulp or seeds or ends, kale petiole base, paprika hull or core or seeds, beet root tip or peel or petiole, broccoli foliage, spinach rootstock, tomato hull, and sweet potato epidermis or ends.
[30] The oil-and-fat hardening agent of any one of [24] to [29] wherein the natural material has been subjected to micronization treatment.
[31] The oil-and-fat hardening agent of [30] wherein the micronization treatment is wet-micronization treatment in oil and fat.
[32] A solid oil-and-fat-containing composition obtainable by a method of any one of [1] to [17] comprising the solid fat, the liquid oil, and the cellulose.
[33] A solid oil-and-fat-containing composition comprising: a solid fat, which is solid at a specific temperature within a range of from -20°C to 40°C; a liquid oil, which is liquid at the specific temperature; and cellulose, wherein the liquid oil and the solid fat are hardened in a mixed state without separating from each other.
[34] The solid oil-and-fat-containing composition of [33] wherein the lower limit of the specific temperature is -10°C or more.
[35] The solid oil-and-fat-containing composition of [34] wherein the lower limit of the specific temperature is -5°C or more.
[36] The solid oil-and-fat-containing composition of any one of [33] to [35] wherein the upper limit of the specific temperature is 30°C or less.
[37] The solid oil-and-fat-containing composition of [36] wherein the upper limit of the specific temperature is 25°C or less.
[38] The solid oil-and-fat-containing composition of any one of [32] to [37] wherein the percentage of the solid fat relative to the total amount of the solid fat and the liquid oil is between 10% by mass and 100% by mass, inclusive.
[39] The solid oil-and-fat-containing composition of [38] wherein the lower limit of the percentage of the solid fat is 10% by mass or more.
[40] The solid oil-and-fat-containing composition of [39] wherein the lower limit of the percentage of the solid fat is 15% by mass or more.
[41] The solid oil-and-fat-containing composition of [40] wherein the lower limit of the percentage of the solid fat is 20% by mass or more.
[42] The solid oil-and-fat-containing composition of any one of [38] to [41] wherein the upper limit of the percentage of the solid fat is 95% by mass or less.
[43] The solid oil-and-fat-containing composition of [42] wherein the upper limit of the percentage of the solid fat is 90% by mass or less.
[44] The solid oil-and-fat-containing composition of any one of [32] to [43] wherein the percentage of the cellulose relative to the total amount of the solid fat and the liquid oil is between 2% by mass and 35% by mass, inclusive.
[45] The solid oil-and-fat-containing composition of [44] wherein the lower limit of the percentage of the cellulose is 2.5% by mass or more.
[46] The solid oil-and-fat-containing composition of [45] wherein the lower limit of the percentage of the cellulose is 3% by mass or more.
[47] The solid oil-and-fat-containing composition of any one of [44] to [46] wherein the upper limit of the percentage of the cellulose is 32.5% by mass or less.
[48] The solid oil-and-fat-containing composition of [47] wherein the upper limit of the percentage of the cellulose is 30% by mass or less.
[49] The solid oil-and-fat-containing composition of any one of [32] to [48] in the form of a food.
[50] The solid oil-and-fat-containing composition of [49] wherein the food is spread.
[51] A solid oil-and-fat-containing composition comprising a liquid oil-and-fat mixture a solid fat, which has the nature of solid in an arbitrary temperature range, and a liquid oil, which has the nature of liquid in the temperature range, which mixture has been hardened in the presence of an oil-and-fat hardening agent containing cellulose.
[52] A method of producing a solid oil-and-fat-containing composition, comprising hardening a liquid oil-and-fat mixture a solid fat, which has the nature of solid in an arbitrary temperature range, and a liquid oil, which has the nature of liquid in the temperature range, in the presence of an oil-and-fat hardening agent containing cellulose.
[53] A method of adjusting a texture and/or a property of a solid oil-and-fat-containing composition comprising a solid fat, which is solid at a specific temperature within a range of from -20°C to 40°C, and a liquid oil, which is liquid at the specific temperature, said method comprising:
   hardening a liquid oil-and-fat mixture, which contains the solid fat and the liquid oil, in the presence of an oil-and-fat hardening agent containing cellulose, and
   adjusting the percentage of the solid fat in the liquid oil-and-fat mixture and/or the percentage of the cellulose to the liquid oil-and-fat mixture.
[54] The method of [53] wherein the lower limit of the specific temperature is -10°C or more.
[55] The method of [54] wherein the lower limit of the specific temperature is -5°C or more.
[56] The method of any one of [53] to [55] wherein the upper limit of the specific temperature is 30°C or less.
[57] The method of [53] wherein the upper limit of the specific temperature is 25°C or less.

### EFFECTS

According to the present invention, adding cellulose as an oil-and-fat hardening agent to a liquid oil-and-fat mixture of a solid fat and a liquid oil renders the solid fat and the liquid oil hardened without separating from each other, thereby yielding a solid oil-and-fat-containing composition easily and efficiently.

### BRIEF EXPLANATION OF THE DRAWINGS

Figure 1 indicates optical micrographs of surfaces of the oil-and-fat-containing compositions prepared in Comparative Example 2 and Test Example 1 shown in Table 2 of Examples 1 (magnitude: x500; scale: 100µm);
Figure 2 indicates optical micrographs of surfaces of the oil-and-fat-containing compositions prepared in Comparative Examples 3 to 8 shown in Table 2 of Examples 1 (magnitude: x250; scale: 100µm);
Figure 3 is a photograph of the oil-and-fat-containing composition prepared in Test Example 49 shown in Tables 7-1 and 7-2 of Example 6;
Figure 4 is a photograph of the oil-and-fat-containing composition (after the addition of water) prepared in Test Example 52 shown in Tables 7-1 and 7-2 of Examples 6;
Figure 5 is a photograph of the oil-and-fat-containing composition prepared in Test Example 42 shown in Tables 7-1 and 7-2 of Examples 6;
Figure 6 is a photograph of the oil-and-fat-containing composition (before the addition of water) prepared in Test Example 44 shown in Tables 7-1 and 7-2 of Examples 6;
Figure 7 is a photograph of the oil-and-fat-containing composition (after the addition of water) prepared in Test Example 44 shown in Tables 7-1 and 7-2 of Examples 6;
Figure 8 is a photograph of the oil-and-fat-containing composition prepared in Test Examples 72 to 79 shown in Table 7 of Examples 7; and
Figure 9 is a photograph of the oil-and-fat-containing composition of prepared in Example 8.

### EMBODIMENTS

The present invention will now be described in detail with reference to specific embodiments. However, the present invention is not limited to the following embodiments and can be implemented in any form without departing from the spirit of the present invention.

### [1. Method of producing a solid oil-and-fat-containing composition]

The present invention provides a method of producing a solid oil-and-fat-containing composition containing a solid fat and a liquid oil, the method including hardening a liquid oil-and-fat mixture containing the solid fat and the liquid oil in the presence of an oil-and-fat hardening agent containing cellulose, i.e., a method of producing a solid oil-and-fat-containing composition by hardening a liquid oil-and-fat mixture containing a solid fat, which has the nature of solid in an arbitrary temperature range, and a liquid oil, which has the nature of liquid in the temperature range, in the presence of an oil-and-fat hardening agent containing cellulose (hereinafter also referred to as "the production method of the present invention").

Solid fats which can be used in the present invention may be any fats having a solid nature at a specific temperature described below, including soft solid fats (such as creamy ones) to hard solid fats. Examples include: palm oil, palm kernel oil, cocoa butter, coconut oil, Bornean butter, dammer resin, nutmeg butter, Mowrah butter, shea butter, het (beef tallow), ghee (fermented beef tallow, fermented goat tallow, etc.), lard (pig tallow), butter (which may contain about 15% by mass of water), beeswax, and the like. These may be used either singly or in combination of two or more, and a composition containing one or more of these may also be used. Examples of solid fats which can be more preferably used from the viewpoint of availability and versatility include: palm oil, palm kernel oil, cocoa butter, coconut oil, ghee, lard, and butter.

Liquid oils which can be used in the present invention may be any oils having a liquid nature at a specific temperature described below. Examples include: corn oil, cottonseed oil, olive oil, peanut oil, rapeseed oil, safflower oil, sesame oil, soybean oil, sunflower oil, almond oil, cashew oil, hazelnut oil, macadamia oil, Mongogo oil, pecan oil, pine nut oil, pistachio oil, walnut oil, gourd oil, buffalo pumpkin oil, pumpkin seed oil, watermelon oil, acai oil, cassis oil, borage seed oil, evening primrose oil, amaranth oil, apricot oil, apple oil, argan oil, artichoke oil, avocado oil, babassu oil, moringa oil, cape chestnut oil, carob oil, cohune oil, coriander seed oil, deca oil, false flax oil, linseed oil, grape seed oil, hemp oil, kapok real oil, lallemancia oil, marula oil, meadowfoam oil, mustard oil, okra oil, papaya oil, perilla oil, pequi oil, poppy oil, prune oil, quinoa oil, niger seed oil, rice oil, royle oil, thatcher inch oil, camellia oil, thistle oil, tomato oil, wheat oil, turnip oil, radish oil, tung oil, algae oil, copaiba oil, croyona seed oil, nanyo brasil oil, jojoba oil, petroleum nut oil, yellowfin oil, balanos oil, crows oil, vernonia oil, bladderpod oil, peach oil, bird dock oil, candle nut oil, carrot seed oil, castor oil, taiko oil, hamana oil, cuphea oil, lemon oil, mango oil, neem oil, Ojon oil, orange oil, rosehip oil, sea buckthorn oil, Tall oil, Tonka bean oil, fish oil, chille (chicken oil), as well as other various kinds of essential oils, mineral oils, refined oils derived from mineral oils, and the like. These may be used either singly or in combination of two or more, and a composition containing one or more of these may also be used. Examples of liquid oils which can be more preferably used from the viewpoint of availability and versatility include: corn oil, cottonseed oil, olive oil, peanut oil, rapeseed oil, safflower oil, sesame oil, soybean oil, sunflower oil, linseed oil, grapeseed oil, and rice oil.

According to the present invention, it is preferable to use a solid fat and a liquid oil which each have the properties mentioned above at the same specific temperature. The specific temperature herein is not limited as long as it is in the range of from -20°C to 40°C, but may preferably be usually -20°C or higher, preferably -10°C or higher, more preferably -5°C or higher, and usually 40°C or lower, preferably 30°C or lower, more preferably 25°C or lower. In one embodiment, the specific temperature is selected from, for example, -20°C, or -15°C, or -10°C, or - 5°C, or 0°C, or 5°C, or 10°C, or 15°C, or 20°C, or 25°C, or 30°C, or 30°C, or 40°C.

The mixing ratio (mass ratio) of the solid fat and the liquid oil may be arbitrarily set depending on various conditions, such as the additive amount of cellulose, the kind(s) of the solid fat(s) and the liquid oil(s), and if two or more solid fats and/or liquid oils are used, the mixing ratio(s) thereof. However, considering the above-mentioned viewpoints (i.e., maintaining its shape, not producing hard coarse crystals, being smooth and not separating the liquid oil), the ratio may preferably be as follows: assuming the total mass of the solid fat and the liquid oil is 100%, then the lower limit of the mixing ratio of the solid fat may preferably be 5% by mass or more, more preferably 10% by mass or more, further preferably 15% by mass or more, even further preferably 20 mass% or more. The upper limit of the mixing ratio of the solid fat may preferably be less than 100% by mass, and from the viewpoint of the objective of the present invention (i.e., substituting for a solid fat while solidifying a liquid oil), may more preferably be 95% by mass or less, further preferably 90% by mass or less.

The "oil-and-fat hardening agent" herein refers to an agent that hardens a liquid oil-and-fat mixture containing a solid fat and a liquid oil. The oil-and-fat hardening agent is not limited as long as it contains at least cellulose. The cellulose is not limited, and may be natural or artificial. However, the cellulose may preferably be derived from a natural source containing cellulose, more preferably from an organism. The organism herein may be selected from plants (cellulose is included as a cell wall component of, e.g., wood and vegetables), animals (cellulose is included as a product of, e.g., ascidian hulls), fungi (cellulose is included as a cell wall component), algae (cellulose is included as a cell wall component), microorganisms (cellulose is included as, e.g., nata de coco, which is a product of acetobacter), and the like. These sources of cellulose may be used either singly or a combination of any two or more. From the viewpoint of availability of materials and versatility, it is preferable to use a plant, a fungus, or a microorganism as the source of cellulose. When cellulose derived from a natural source is used, the form of the cellulose is not limited. Specifically, the natural source dried and micronized may be used as the cellulose, or the cellulose may be extracted from the natural source and subjected to pretreatment such as purification and molding before use. The oil-and-fat hardening agent herein may consist only of cellulose, or may be in the form of a composition containing cellulose mixed with other ingredients and materials, so long as the properties and effects of the cellulose as the oil-and-fat hardening agent can be exhibited.

The average particle size of cellulose may be arbitrarily set depending on various conditions such as the combination of the solid fat(s) and the liquid oil(s) and their mixing ratio(s). However, from the viewpoint of effectively exhibiting the properties and effects as the oil-and-fat hardening agent, the lower limit of the average particle diameter of the cellulose may preferably be 0.3 µm or more, and from the viewpoint of avoiding the possible risks involved in nanomaterials, it may more preferably be 0.5 µm or more, even more preferably 1.0 µm or more. On the other hand, from the viewpoint of effectively exhibiting the properties and effects as the oil-and-fat hardening agent, the upper limit of the average particle size of cellulose may preferably be 400 µm or less, and in view of the above-mentioned viewpoints (i.e., maintaining its shape, not producing hard and coarse crystals, being smooth and not separating the liquid oil), the upper limit may more preferably be 250 µm or less, even more preferably 100 µm or less. The average particle size of cellulose herein can be measured by using a laser diffraction particle size distribution measuring device, such as Microtrac MT3300 EXII system manufactured by Microtrac Bell Co., Ltd.. The solvent to be used for the measurement may be distilled water, and the application software to be used for the measurement may be, e.g., DMS2 (Data Management System version2, Microtrac Bell Co., Ltd.). The particle size (d50) can be measured and expressed as the average particle size.

The mass ratio of cellulose may be arbitrarily set depending on various conditions such as the combination of the solid fat(s) and the liquid oil(s) and their mixing ratio(s). In general, from the above viewpoints (i.e., maintaining its shape, not producing hard coarse crystals, being smooth and not separating the liquid oil), the lower limit of the percentage of cellulose relative to the total mass of the solid fat and the liquid oil may preferably be 2% by mass or more, more preferably 2.5% by mass or more, even more preferably 3% by mass or more. The upper limit of the percentage of cellulose relative to the total mass of the solid fat and the liquid oil may preferably be 35% by mass or less, but from the viewpoints of facilitating the mixing operation and effectively exhibiting the properties and effects as the oil-and-fat hardening agent, may more preferably be 32.5% by mass or less, even more preferably 30% by mass or less.

According to the production method of the present invention, a liquid oil-and-fat mixture containing the solid fat and the liquid oil is prepared. Although the specific process for preparing the mixture is not limited, an example of such a procedure includes: liquefying the solid fat and the liquid oil by heating them together to a temperature equal to or higher than the melting point(s) thereof while mixing them to prepare a liquid oil-and-fat mixture, adding the oil-and-fat hardening agent to the liquid oil-and-fat mixture, and then cooling the liquid oil-and-fat mixture to harden it. Another example of such a process includes: liquefying each of the solid fat, the liquid oil, and the oil-and-fat hardening agent by heating them separately to a temperature equal to or higher than their respective melting points, mixing them together to prepare a liquid oil-and-fat mixture, and then cooling the liquid oil-and-fat mixture to harden it. Both processes can preferably be used according to the production method of the present invention.

The solid fat and the liquid oil are heated, either together or separately, to temperature(s) equal to or higher than above their respective melting points to liquefy while mixing them. The order of the heating and the mixing is not limited but may be arbitrary. For example, the solid fat and the liquid oil may be separately heated and liquefied before being mixed with each other, or the solid fat and the liquid oil may be heated, liquefied together while being mixed with each other. The method of mixing is not limited as long as the oil-and-fat hardening agent, the solid fat, and the liquid oil can uniformly be mixed. If the total volume of the components is small, these components may be put in any container and shaken by hand to mix then, while if the total volume is large, they may be mixed with a kneader or in a container with a stirrer until they become uniform. In general, it is preferable to use a kneader when the mixture becomes semi-solid during the mixing, while the use of a container with a stirrer is sufficient when the mixture remains liquid during the mixing. In the latter case, if the mixture re-hardens during the mixing, then the stirring container may be heated as necessary, while if such re-hardening does not occur, then heating of the container may not be necessary.

The liquid oil-and-fat mixture containing the solid oil and the liquid oil may contain one or more other components or materials than cellulose, provided that the effects of cellulose as an oil-and-fat hardening agent can be exhibited. Examples of such other components and materials may include, regardless of whether the final solid oil-and-fat-containing composition is edible or non-edible: sweeteners, colorants, preservatives, thickeners, stabilizers, gelling agents, pastes, antioxidants, colorants, bleaches, mold-proofing agents, yeast foods, gum bases, brine, bittering agents, enzymes, brightening agents, flavoring agents, acidulants, chewing gum softeners, seasonings, tofu coagulants, emulsifiers, pH adjusters, leavening agents, nutrient enhancers, other food additives, water, alcohol, foodstuffs, processed foods, medicaments, chemicals, processed chemicals, etc. These may be used either alone or in combination of two or more, and a composition containing one or more of these may also be used. Although not limited, the amount of such other components may usually be 100% by weight or less, preferably 80% by weight or less, and more preferably 60% by weight or less, with respect to the total amount of the solid fat and the liquid oil.

According to the production method of the present invention, the liquid oil-and-fat mixture containing the solid oil and the liquid oil obtained by the above procedure is then hardened in the presence of the oil-and-fat hardening agent containing cellulose. The process for placing the liquid oil-and-fat mixture in the presence of cellulose is not particularly limited. Examples thereof include, as described above: a process including mixing the solid oil and the liquid oil to prepare the liquid oil-and-fat mixture and then adding the oil-and-fat hardening agent to the liquid oil-and-fat mixture; and a process including mixing the solid oil and the liquid oil with the oil-and-fat hardening agent together to prepare the liquid oil-and-fat mixture containing the oil-and-fat hardening agent at once. Both of these processes can preferably be used for the production method of the present invention. In order to harden the mixture, the mixture which has been stirred uniformly may be placed in an arbitrary container and allowed to stand at room temperature to low temperature. The time required for hardening varies depending on conditions such as the temperature for hardening, the amount and the shape of the mixture, etc., although the hardening can be achieved in several hours to overnight, and the period is not particularly limited. As long as the effects of the present invention are exhibited, the hardened mixture usually maintains its shape without separating the liquid oil, and remains to be in a solid state, usually at 20°C, preferably both at 10°C and at 20°C. When cocoa butter is used as the solid fat, a tempering operation may be performed to impart more hardness and smoothness (an example of the tempering operation includes: changing the temperature of the mixture from 42°C to 29°C to 32°C, and then leaving the mixture at 20°C for overnight or for two consecutive nights to allow the mixture to harden). Examples of the devices for performing the tempering operation include: "Melting & Tempering Machine Mini Revolution FV-68 (FITTECH sales)."

The term "solid state" herein refers to the state of the solid oil-and-fat-containing composition prepared via solidification of the liquid oil-and-fat mixture in the presence of the oil-and-fat hardening agent, without apparently separating the liquid oil usually at 20°C, preferably both at 10°C and 20°C. This state can be visually identified by: wrapping the composition with a material that does not have the property of absorbing any fats or oils, such as a transparent wrap film for foods, leaving the wrapped composition at 20°C, preferably both at 10°C and at 20°C, for an arbitrary time, and then observing the appearance of the wrapped composition visually.

The physical state of the solid oil-and-fat-containing composition is not limited as long as the liquid oil is not separated, and may be in any form of semi-solid to solid state, including gel-like state, cream-like state, hard solid state, etc.

As the local properties, the solid oil-and-fat-containing composition is required not to generate remarkably large hard coarse crystals of fat(s) and/or oil(s). Specifically, even if the mixture is hardened as described above, if hard coarse crystals derived from fat(s) and/or oil(s) (e.g., crystals of palmitic acid contained in palm oil) are generated, the resultant solid oil-and-fat-containing composition may exhibit a remarkably rough feel and texture, and may therefore not be desired from the perspective of versatility. Whether such coarse crystals of fat(s) and/or oil(s) are generated can be determined, e.g., based on the touch or the texture, or by observing the surface of the solid oil-and-fat-containing composition with a microscope, as demonstrated in the examples and shown in the figures. When coarse crystals are generated, a noticeable hard texture is felt, and a lump having a size of more than 100 µm can be seen via microscopic observation of the surface of the composition. The type of the microscope to be used in this observation is not particularly limited as long as it can fulfill its function in this context.

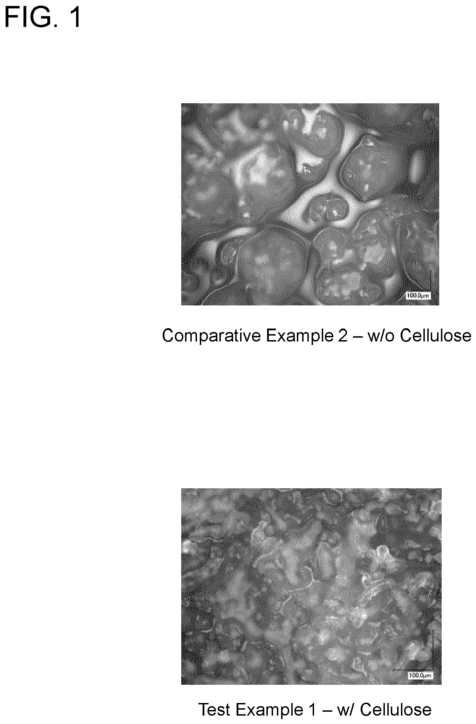

If the solid fat and the liquid oil are mixed without using the oil-and-fat hardening agent containing cellulose, the liquid oil is usually not hardened and separated from the mixture. In such a case where a liquid oil is separated from a mixture of the liquid oil with a solid fat, not only do visual observation or examination by touch show the presence of significantly large coarse crystals derived from the solid fat, but also microscopic observation reveals the presence of large voids between the crystals (see, e.g., Comparative Example 2 in Figure 1). This suggests that the solid oil crystalizes while excluding the liquid oil into the voids between the crystals, thereby causing the separation of the liquid oil.

On the contrary, according to the production method of the present invention, the mixture of the solid fat and the liquid oil in a suitable ratio can be hardened with the oil-and-fat hardening agent containing cellulose (i.e., the liquid oil does not separate). The resultant solid oil-and-fat-containing composition is almost smooth in touch and texture, with almost no roughness due to hard coarse crystals derived from the solid fat. Microscopic observation of the surface also reveals that there are no coarse crystals derived from the solid fat or the large voids between such crystals. Instead, fine fat and oil crystals were densely packed, while no visible voids are observed between them (see Figure 1 of Test Example 1). This suggests that the liquid oil is confined within the fine crystalline structure due to, e.g., the action of surface tension or the like, thereby preventing the separation of the liquid oil.

### [2. Oil-and-fat hardening agent]

The present invention also provides an oil-and-fat hardening agent containing cellulose (hereinafter also referred to as "the oil-and-fat hardening agent of the present invention") for use in the production method of the present invention described above and the physical-property adjusting method of the present invention described below. Details of the oil-and-fat hardening agent, details of cellulose, and details of the method of using the oil-and-fat hardening agent are as described above in relation to the production method of the present invention.

Specifically, the plant-derived natural materials containing cellulose in the oil-and-fat hardening agent of the present invention is not limited as long as it contains an edible portion, but may include: cereals, beans, seeds and nuts, vegetables, potatoes, mushrooms, fruits, algae, spices, and the like. Preferred among these are cereals, beans, seeds and nuts, vegetables, potatoes, mushrooms, and fruits. These natural materials may be used either alone or in any combination of two or more. These natural materials may be used as they are, or may be subjected to various treatments (e.g., drying, heating, lye removal, peeling, seed removal, ripening, salting, fruit skin treatment, etc.) before use. The classification of such food materials can be determined based on the state of the entire plant body which also contains its non-edible portion.

Cereals can arbitrary be selected. Examples include, but are not limited to, amaranth, foxtail millet, oat, barley, proso millet, quinoa, wheat, rice, sugar cane, buckwheat, corn (particularly sweet corn), adlay, Japanese barnyard millet, fonio, sorghum, and the like. Preferred among them are corn (particularly sweet corn), giant corn, and the like.

Beans can arbitrary be selected. Examples include, but are not limited to, common bean, kidney beans, red beans, white beans, black beans, quail beans, lentils, lima beans, safflowers, soybeans (especially edamame, i.e., immature, unripe seeds of soybean harvested together with their pods and characterized by their green appearance), peas (especially green peas, i.e., immature, unripe seeds of pea harvested together with their pods and characterized by their green appearance), chickpeas, lentils, Flat green beans, lentils, peanuts, lupine beans, grass peas, carob, twisted cluster beans, African locust beans, coffee beans, cacao beans, and Mexican beans. Even if a material has an edible portion which is treated as a vegetable (e.g., edamame, green peas, etc.), the state of the material as a whole plant (soybeans, peas, etc.) combined with a non-edible portion (pods, etc.) should be considered when deciding whether it belongs to beans. Preferred among these are soybeans (particularly unripe seeds, i.e., edamame) and peas (particularly unripe seeds, i.e., green peas).

Examples of seeds and nuts include, but are not limited to, almonds, cashews, pecans, macadamia nuts, pistachios, hazelnuts, coconuts, pine nuts, sunflower seeds, pumpkin seeds, watermelon seeds, chinquapin seeds, walnuts, chestnuts, ginkgo nuts, sesame, brazil nuts, and the like. Preferred among these are: almonds, cashew nuts, macadamia nuts, pistachio, hazelnuts, coconuts, and the like.

Examples of vegetables include, but are not limited to: radish, carrot, rutabaga, parsnip, turnip, black salsify, lotus root, beet (preferably beetroot, a variety of beet whose root has been improved as an edible portion), kuwai (arrowhead tuner), shallot, garlic, rakkyo (Chinese onion), lily root, kale, onion, asparagus, udo (Japanese spikenard), cabbage, lettuce, spinach, hakusai (nappa cabbage), aburana (oilseed rape leaves), komatsuna (Japanese mustard spinach), bok choy (Chinese cabbage), garlic chives, negi (Welsh onion), nozawana (Brassica rapa L. var. hakabura), fuki (butterbur), chard (Swiss chard), mizuna, tomato, eggplant, pumpkin, bell pepper, cucumber, ginger, cauliflower, broccoli, edible chrysanthemum, nigauri (bitter gourd), okra, artichoke, zucchini, sugar beet, tiger nuts, ginger, shiso (perilla mint), wasabi, paprika, herbs (watercress, coriander, water spinach (Ipomoea aquatica), celery, tarragon, chive, chervil, sage, thyme, laurel, parsley, mustard greens, yomogi (mugwort), basil, oregano, rosemary, peppermint, savory, lemongrass, dill, wasabi leaf, sansho (Japanese pepper) leaf, stevia), warabi (bracken), zenmai (Asian royal fern), kudzu (East Asian arrowroot), takenoko (bamboo shoot), and the like. Preferred among these are: carrot, pumpkin, tomato, paprika, cabbage, beet (preferably beets (beetroot)), onion, broccoli, asparagus, spinach, kale, etc., of which carrot, pumpkin, paprika, beet (preferably beets) (Beetroot)), broccoli, spinach, and kale are particularly preferred.

Potatoes can arbitrarily be selected. Examples include, but are not limited to, sweet potato, cassava, yacon, taro, sato-imo (Japanese taro), konjac potato, tashiroimo (Polynesian arrow root), potato, purple yam, Jerusalem artichoke, katakuri (Asian fawnlily), yam, yama-imo (Japanese mountain yam), Chinese yam, kudzu-imo (jícama), etc. Preferred among thesse are: purple potato, sweet potato, and the like.

Examples of mushrooms include, but are not limited to, shiitake mushroom, matsutake mushroom, kikurage mushroom (jelly ear), maitake mushroom (ram's head), Polyporaceae (Dryad's saddle), hiratake (pearl oyster mushroom), eryngii mushroom (king trumpet mushroom), enokitake mushroom (velvet shank), shimeji mushroom, naratake mushroom (honey fungus), common mushroom, nameko mushroom, amitake mushroom (Jersey cow mushroom), hatsutake mushroom, chichitake (weeping milk cap), and the like.

Fruits can arbitrarily be selected. Examples include, but are not limited to, acerola, avocado, apricots, strawberries, figs, plum, citrus (e.g., iyokan, Citrus unshiu (tangerine), orange, grapefruit, lime, lemon), olive, persimmon, kiwi, guava, pomegranate, watermelon, sumomo (Japanese plum), cherry (sakuranbo (Japanese cherry), black cherry, etc.), jujube, pineapple (pine), haskap, banana, papaya, loquat, grape, berry (blueberry, raspberry, etc.), mango, mangosteen, melon, peach, apple, and the like. Preferred among these are: avocado, strawberry, berry, citrus, grape, and apple, of which strawberry and apple are particularly preferable.

Algae can arbitrarily be selected. Examples include, but are not limited to: large algae such as species belonging to Laminariales, Undaria, Pyropia, Ulvaceae, and Gelidiaceae; and microalgae such as species belonging to Chlorophyceae, Rhodophyta, Cyanobacteria, Dinophyceae, and Euglenophyceae. Specific examples include: aosa (sea lettuce), aonori (Green laver), anaaosa (Ulva pertusa), umi-budo (sea grape, Caulerpa lentillifera), katashio-gusa (Cladophora ohkuboana), kubire-zduta (a variation of Caulerpa lentillifera), kuromiru (Codium subtubulosum), tamamiru (Codium minus), tori-no-ashi (yuikiri, Acanthopeltis japonica), hitoe-gusa (Monostroma nitidum), hiraaonori (Ulva compressa Linnaeus), fusaiwazuta (Caulerpa okamurae), grass kelp (Ulva intestinalis), akamoku (Sargassum horneri), amiji-gusa (Dictyota dichotoma), arame (sea oak, Eisenia bicyclis), antokume (Ecklonia radicosa), genus Ishige, ichimegasa (Carpomitra costata), iroro (Ishige sinicola), iwahige (Cassiope lycopodioides), umi-tra-no-o (Sargassum thunbergii), umi-uchiwa (Padina arborescens), oba-moku (Sargassum ringgoldianum), okinawa mozuku (Cladosiphon okamuranus), kaigara-amanori (Neopyropia tenuipedalis), kagome-nori (Hydroclathrus clathratus), kajime (arame, Eisenia bicyclis), kayamo-nori (Scytosiphon lomentaria), gibasa (akamoku, Sargassum horneri), Sanada-gusa (Dictyota coriacea), shiwano-kawa (Petrospongium rugosum), shiwaya-hazu (Dictyopteris undulata), European haba-nori (Petalonia fascia), tsuru-arame (Ecklonia stolonifera), na-nori (Scytosiphon lomentaria), nebari-mo (Leathesia difformis), nokogiri-moku (Sargassum macrocarpum), haba-nori (Petalonia binghamiae), hijiki (Sargassum fusiforme), hirome (Undaria undariodes), fukuro-nori (Colpomenia sinuosa), futo-mozuku (Tinocladia crassa), hondawara (Sargassum fulvellum), ma-konbu (Saccharina japonica), matsu-mo (Ceratophyllum demersum), mugiwara-nori (Scytosiphon lomentaria), mutimo (Mutimo cylindricus), mozuku (Nemacystus decipiens), yuna (Chondria crassicaulis), wakame (Undaria pinnatifida), asakusa-nori (Pyropia tenera), ibo-tsuno-mata (Chondrus verrucosus), ushikenori (species belonging to family Bangiaceae), usukawa-kaninote (Amphiroa beauvoisii), ezo-tsunomata (Chondrus yendoi), obusa (Gelidium pacificum), ogo-nori (species belonging to genus Gracilaria), okitsu-nori (Gymnogongrus flabelliformis), oba-kusa (Pterocladiella tenuis), kata-nori (Grateloupia divaricata), kabanori (Gracilaria textorii), kamogashira-nori (Dermonema pulvinatum), kijino-o (Phacelocarpus japonicus), kuroha-ginnnann-sou (ezo-tsunomata, Chondrus yendoi), sakura-nori (Grateloupia imbricata), shira-mo (Gracilaria parvispora), tannba-nori (Pachymeniopsis elliptica), tsuno-mata (Chondrus ocellatus), tsuru-shira-mo (Gracilariopsis chorda), turuturu (Grateloupia turuturu), tosaka-nori (Meristotheca papulosa), tosaka-matsu (Grateloupia crispata), noge-nori (Gloiopeltis furcata), nori (species belonging to family Ulvaceae), hanafu-nori (Gloiopeltis complanata), hari-gane (Ahnfeltiopsis paradoxa), hira-garagara (Dichotomaria falcata), hira-kusa (Ptilophora subcostata), hira-mukade (Grateloupia livida), birihira (Corallina pilulifera), fukuro-nori (Gloiopeltis furcata), fushi-tsunagi (Lomentaria catenata), ma-kusa (Gelidium elegans), maruba-ama-nori (Calidia suborbiculata), mitsude-sozo (Laurencia okamurae), midori-mushi (species belonging to genus Euglena), chlorella, mirin (Solieria robusta), mukade-nori (Grateloupia asiatica), yuikiri (Acanthopeltis japonica), ten-gusa (species belonging to genus Gelidiaceae), and the like. Some microalgae having robust cell walls, such as chlorella, should be subjected to pretreatment to destroy the cell walls before use. Alternatively, algae other than microalgae may preferably be used.

Spices can arbitrarily be selected. Examples include, but are not limited to: white pepper, red pepper, chili pepper, horseradish, mustard, poppy, nutmeg, cinnamon, cardamom, cumin, saffron, allspice, cloves, Sansho (Japanese pepper), Orange peel, fennel, liquorice, fenugreek, dill seed, cacao, long pepper, olive fruit, and the like.

In addition to the natural materials containing cellulose described above, the oil-and-fat hardening agent of the present invention may contain one or more food materials. Examples of such food materials include: plant-based food materials, microorganism-based food materials, and animal-based food materials. Preferred among these are plant-based food materials. Examples of plant-based food materials include, but are not limited to: cereals, potatoes, beans, seeds, vegetables, fruits, mushrooms, algae, spices, and the like. Preferred among these are cereals, potatoes, beans, seeds, vegetables, fruits, mushrooms and the like. These food materials may be used either singly or in any combination of two or more. Their edible portion and/or non-edible portion can be used in any combination. These food materials may be used without any pretreatment, or they may be subjected to various treatments (for example, drying, heating, lye removal, peeling, seed removal, ripening, salting, fruit-skin treatment, etc.) before use. The classification of such food materials can be determined based on the state of the entire plant body which also contains its non-edible portion.

When the natural material used in the oil-and-fat hardening agent of the present invention contains an edible portion and a non-edible portion, only the edible portion may be used, only the non-edible portion may be used, or both the edible portion and the non-edible portion may be used together. However, it is preferable to use at least the non-edible portion, since such a non-edible portion contains a large amount of cellulose, which can function as an oil-and-fat hardening agent.

The term "non-edible portion" of a natural material used herein refers to a portion of the natural material that is not suitable for usual eating and drinking, or a portion that is discarded under normal eating habits. The term "edible portion" used herein refers to a part of the natural material excluding a discarded part (non-edible portion). A food material including a non-edible portion is usually not preferred because of its difficulty to eat and its poor compatibility with other foods, and have often been discarded without being used for eating. However, according to the present invention, such a non-edible portion can be preferably used. In the present invention, the mass percentage of the non-edible portion in the oil-and-fat hardening agent of the present invention may preferably be 0.1% by mass or more, more preferably 0.2% by mass or more, even more preferably 0.4% by mass or more, further preferably 0.6% by mass or more, still further preferably 0.8% by mass or more, particularly 1.0% by mass or more, or 2.0% by mass or more, most preferably 3.0% by mass or more, in terms of wet weight. The upper limit of the mass percentage may usually be 98% by mass or less, preferably 91% by mass or less, more preferably 85% by mass or less, still more preferably 80% by mass or less, most preferably 55% by mass or less. The mass percentage of the non-edible portion in the oil-and-fat hardening agent of the present invention staying within the above range is preferable from the viewpoint of the effects of hardening the oil-and-fat mixture.

One or more edible portion(s) and/or one or more non-edible portion(s) of a natural material which may be used in the oil-and-fat hardening agent of the present invention may be derived from the same natural source, or may be any combination of two or more from different natural sources. When both the edible portion and the non-edible portion are contained, the mass percentage of "(the non-edible portion)/{(the edible portion) + (the non-edible portion)}" may preferably be 0.2% or more since the taste of the edible portion is improved, more preferably 0.5% or more, still more preferably 0.8% or more, further preferably 1.0% or more, even further preferably 2.0% or more, particularly preferably 3.0% or more. The upper limit of the mass percentage is usually 100% or less, and may preferably be 90% or less, more preferably 80% or less, still more preferably 70% or less, and particularly preferably 60% or less.

When the oil-and-fat hardening agent of the present invention contains both an edible portion and a non-edible portion of a natural material, the edible portion and the non-edible portion may be derived from different kinds of natural materials, However, the oil-and-fat hardening agent may preferably contain an edible portion and an inedible portion derived from the same type of natural material. Using a part or all of an edible portion and a part or all of a non-edible portion derived from the same type of natural material offers an advantage in that the nutrients of the natural material can be consumed without any waste.

Specifically, the oil-and-fat hardening agent of the present invention may preferably contain an edible portion and a non-edible portion derived from the same kind of natural material in an amount of 6% by mass or more, more preferably 8% by mass or more, still more preferably 10 % by mass or more, further preferably 15% by mass or more, still further preferably 18% by mass or more, most preferably 20% by mass or more. On the other hand, the upper limit may usually be 90% by mass or less, preferably 80% by mass or less, more preferably 70% by mass or less, still more preferably 60% by mass or less, and particularly preferably 50% by mass or less.

Examples of non-edible portions of natural materials which may be used in the oil-and-fat hardening agent of the present invention include skins, seeds, cores, pomaces and the like of the various natural materials described above. Preferred among these are, but not limited to, skins, seeds, cores, pomaces, etc., of corns, soybeans (e.g., immature seeds, i.e., edamame), peas (e.g., immature seeds, i.e., green peas), carrot, pumpkin, cabbage, kale, onion, paprika, beet (preferably, beetroot), broccoli, spinach, tomato, apple, avocado, and citrus, which are rich in nutrients and therefore can preferably be used in the present invention. Specific examples thereof include, but are not limited to: corn bract, pistil, and cob (core); soybeans (e.g., immature seeds, i.e., edamame) pods; peas (e.g., immature seeds, i.e., green peas) pods; carrot root tip and petiole base; pumpkin seeds and pulp; cabbage core; kale petiole base; onion protective leaves or bottom or head; paprika seeds and squash; beet (preferably peel of beetroot) peel; broccoli foliage; spinach rootstock; tomato hull; apple core; avocado seeds or skin; and citrus skin, seeds and pulp. Preferred among these from the viewpoint of productivity and flavor are: corn core; soybeans (e.g., immature seeds, i.e., edamame) pods; peas (e.g., immature seeds, i.e., green peas) pods; carrot petiole base; pumpkin seeds and pulp; kale petiole base; paprika seeds and squash; beet (preferably beetroot) peel; broccoli foliage; spinach rootstock; and tomato hull.

The position and the ratio of a non-edible portion in a natural material which may be used in the oil-and-fat hardening agent of the present invention can easily be understood by those skilled in the art in the field of food and processed food products. For example, the "refused portion" and the "refuse (rate)" described in the Japanese Standard Tables of Food Composition 2015 (7th edition) can be referred to as position and the ratio, respectively, of a non-edible portion of the natural material. Table 1 below shows examples of insoluble dietary fiber-containing food materials along with the "refused portion" and the "refuse (rate)" (that is, the position and the ratio, respectively, of the non-edible portion) described in the Japanese Standard Tables of Food Composition 2015 (7th edition) for each of these food materials. The position and the ratio of an edible portion of each natural material can be understood based on the position and the ratio of the non-edible

**Table 1**

| Edible plants | Position of non-edible portion | Ratio of non-edible portion |
|---|---|---|
| | (refused portion) | (refuse) |
| Vegetables/Edamame/Raw | Pod | 45% |
| Vegetables/(Corns)/Sweet corn/Immature seeds, raw | Bract, pistil, and cob | 50% |
| Vegetables/(Pumpkins)/Japanese pumpkin/Fruit, raw | Pulp, seeds, and ends | 9% |
| Vegetables/(Peppers)/Red pepper/Fruit, raw(Paprika) | Hull, core, and seeds | 10% |
| Vegetables/Beet/Root, raw | Root tip, peel, and petiole | 10% |
| Vegetables/Broccoli/Inflorescence, raw | Foliage | 50% |
| Vegetables/(Tomates)/Tomato/Fruit, raw | Hull | 3% |
| Vegetables/(Cabbages)/Cabbage/Heading leaves, raw | Core | 15% |
| Vegetables/Spinach/Leaves, raw | Rootstock | 10% |
| Vegetables/Kale/Leaves, raw | Petiole base | 3% |
| Vegetables/(Peas)/Green peas/Raw | Pod | 55% |
| Vegetables/Broad bean/Immature bean/Raw | Coat and pod | 80% |
| Vegetables/(Carrots)/Root, unpeeled, raw | Root tip and petiole base | 3% |

When cellulose is used as the oil-and-fat hardening agent of the present invention, it is preferable, although not necessary, to adjust its average particle size to within the range mentioned above via microniztion treatment, in order to uniformly mixing the cellulose into the mixture of the solid fat and the liquid oil. The method of micronization treatment may be either a dry method or a wet method. Examples of dry-type micro pulverizers include: medium stirring mills such as dry bead mills, ball mills (e.g., rolling type mills, vibration type mills, etc.); jet mills; high-speed rotary impact mills (e.g., pin mills); roll mills, and hammer mills. Examples of wet-type micro pulverizers include: medium stirring mills such as bead mills and ball mills (e.g., rolling type mils, vibration type mills, planetary type mills, etc.); roll mills; colloid mills; StarBurst^{tm} systems; and high pressure homogenizers. Preferred among them from the viewpoint of processing efficiency are colloid mills, high-pressure homogenizers, roll mills, and bead mills as medium stirring mills.

When a cellulose-containing natural material, such as a biological material, is used as the oil-and-fat hardening agent of the present invention instead of purified cellulose, it is preferred to subject the natural material either to wet-micronization treatment (treatment in a heated and liquefied state) together with the solid fat or to wet-micronization treatment together with the liquid oil. In this case, a medium stirring mill may preferably be used from the viewpoint of homogenizing the components and adjusting their particle sizes to a uniform value, for the following reasons. When the cellulose-containing material is micronized in the presence of oil and/or fat, the particles of the cellulose-containing material are intimately kneaded with the oil and/or fat together via the micronization treatment, and the surface layer of each particle of the cellulose-containing material is coated with the oil and/or fat, which coating renders the particles to more easily blend with the mixture of the solid fat and the liquid oil. This increases the homogeneity of these components in the mixture further and makes the resulting solid oil-and-fat-containing composition harder and smoother while preventing the separation of the liquid oil more effectively.

It is preferable to dry and coarsely pulverize the cellulose or the natural material containing cellulose prior to the micronization treatment. The means for drying may be any means commonly used for drying a material. Examples include sun drying, shade drying, freeze drying, air drying (e.g., hot air drying, fluidized bed drying, spray drying, drum drying, low temperature drying, etc.), high pressure drying, reduced pressure drying, microwave drying, oil heat drying, etc. Preferred among these are air drying and freeze drying, since they can easily adjust the water content regardless of the material and are easily applicable for industrial large-scale processing (the air drying may preferably be room temperature drying, warm air drying, or short-time hot air drying, especially from the viewpoint of minimizing quality change).

The means used for coarsely pulverizing the cellulose or the cellulose-containing natural material is not particularly limited, and may be any means as long as it can process foods with high shearing force for a short time. Examples include various devices called blenders, mixers, mills, kneaders, pulverizers, crushers, grinders, etc. This step of pulverizing may be carried out either in a dry condition or in a wet condition, or at high temperatures, normal temperatures, or low temperatures.

### [3. Method of adjusting properties of a solid oil-and-fat-containing composition]

The present invention also provides a method of adjusting a texture and/or a property of a solid oil-and-fat-containing composition comprising a solid fat and a liquid oil (hereinafter also referred to as "the property adjusting method of the present invention"). The property adjusting method of the present invention include: hardening a liquid oil-and-fat mixture, which contains the solid fat and the liquid oil, in the presence of an oil-and-fat hardening agent containing cellulose; and adjusting the percentage of the solid fat in the liquid oil-and-fat mixture and/or the percentage of the cellulose to the liquid oil-and-fat mixture.

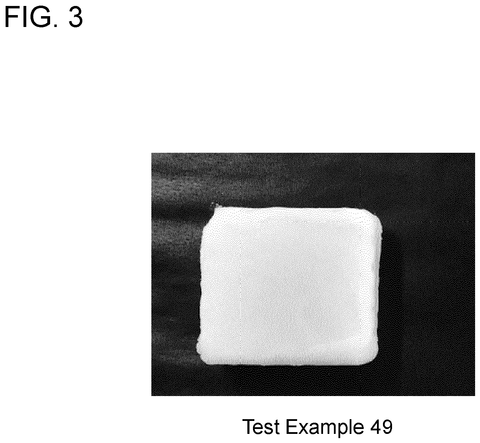

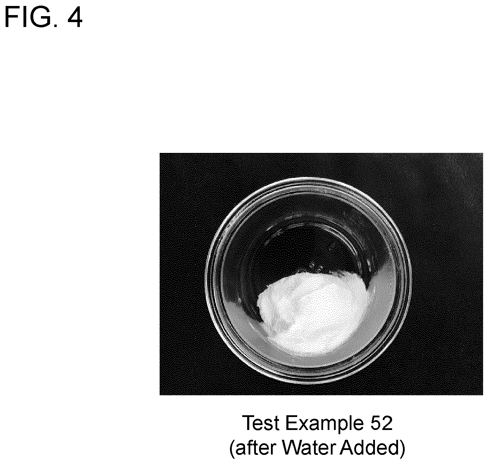

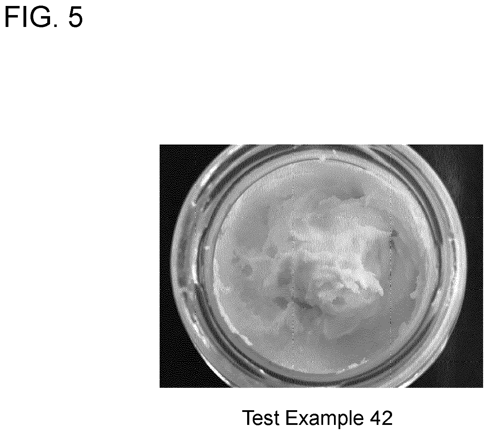

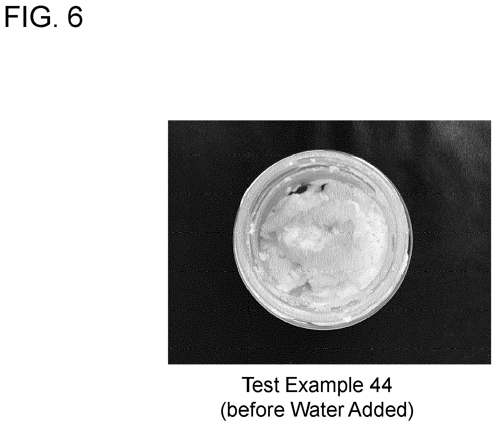

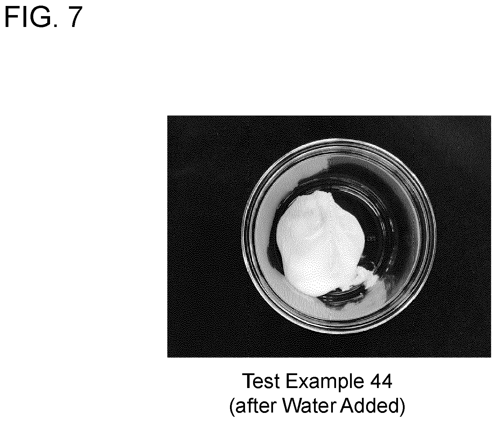

Detailed examples of the property adjusting method of the present invention will be described in the Examples below. One of these examples shows that a high-melting-point palm oil (melting point 42 to 48°C), a kind of palm fractionated oil, as a solid fat was mixed with olive oil as a liquid oil at a mass mixing ratio of 4:6. When this mixture was mixed with purified cellulose was added in an amount of 25% by mass, the resulting composition became a hard solid at 20°C (see FIG. 3), and when it was further mixed with 10% by mass of water, it became a slightly elastic gel (see FIG. 4). Another example shows that an extra-high-melting-point palm oil (melting point 48 to 50°C) as a solid fat and olive oil as a liquid oil were mixed at a mass mixing ratio of 7:3, and further mixed with purified cellulose as an oil-and-fat hardening agent in an amount of 10% by mass. The resultant composition was in a whipped-cream like state that was soft and viscous at 20°C (see Figure 5). Still another example shows that a low-melting-point palm oil (melting point 34 to 40°C) and olive oil as a liquid oil were mixed at a mass mixing ratio of 7:3, and then mixed with purified cellulose as an oil-and-fat hardening agent in an amount of 10% by mass. The resultant composition was in a rough and viscous creamy state at 20°C (see FIG. 6). When it was further mixed with 5% by mass of water, the resultant composition was in a smooth and viscous creamy state at 0°C (see FIG. 7). The compositions obtained in these examples did not show detectable levels of separation of the liquid oil, change in properties (30°C., storage for 2 months), or formation of coarse crystals of the fat and/or oil.

As described above, the properties of the solid oil-and-fat-containing composition as the final product can variously be controlled by changing various conditions, such as the type and mixing ratio of the solid fat to be mixed, the additive amount of cellulose as the oil-and-fat hardening agent, and the presence or absence of water. In addition to the above examples, the properties of the solid oil-and-fat-containing composition is deemed to be controlled, e.g., by changing the type and mixing ratio of the liquid oil, or by adding various cellulose-containing compositions.

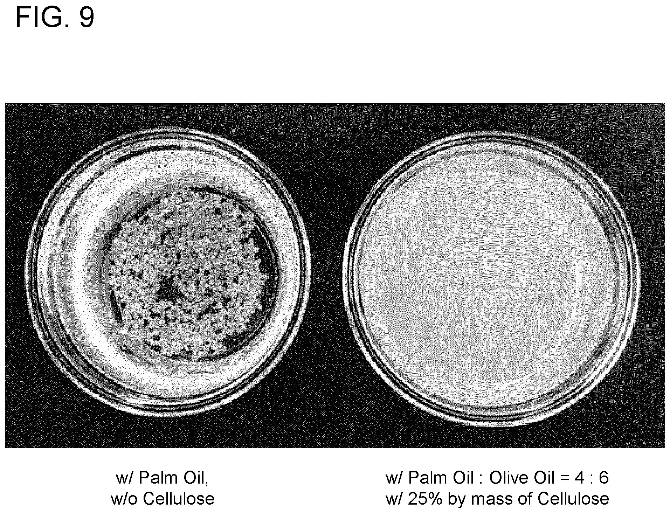

When the solid oil-and-fat-containing composition obtained via the property adjusting method of the present invention is dissolved in warm water, its dispersibility into hot water can remarkably be improved (see FIG. 9). This is presumably because the amphipathicity of cellulose serves to help both the oil and the fat disperse in hot water. Thus, the solid oil-and-fat-containing composition may be made into various modes not only based on its properties, but also by adding various external factors thereto, e.g., melting, heating, cooling, pressurizing, depressurizing, and bubbling.

Thus, according to the property adjusting method of the present invention, properties of the solid oil-and-fat-containing composition as the final product can freely be adjusted by changing and combining various conditions, e.g.: the type of the solid fat; the type of the liquid oil; the mixing ratio of the solid fat and the liquid oil; use of one or more other ingredient(s)/material(s) and the mixing ratio(s) thereof; the amount of cellulose added; use of a cellulose-containing composition and the additive amount thereof; and use of water and the additive amount thereof. This makes it possible to change the properties of the solid oil-and-fat-containing composition according to its intended uses, and even to generate new uses of the solid oil-and-fat-containing composition based on the resulting properties. Various modes of the solid oil-and-fat-containing composition can also be achieved by adding various external factors thereto.

Other details of the property adjusting method of the present invention can be understood from the details of the oil-and-fat hardening agent of the present invention and the production method of the present invention described above.

### [4. Solid oil-and-fat-containing composition]

The present invention also provides a solid oil-and-fat-containing composition via the production method of the present invention or the property adjusting method of the present invention, that is, a solid oil-and-fat-containing composition prepared by hardening a liquid oil-and-fat mixture of a solid fat, which has the nature of solid in an arbitrary temperature range, and a liquid oil, which has the nature of liquid in the temperature range, in the presence of an oil-and-fat hardening agent containing cellulose (hereinafter also referred to as "the solid oil-and-fat-containing composition of the present invention").

As described above, such a solid oil-and-fat-containing composition can be prepared using the production method of the present invention or the property adjusting method of the present invention, by hardening a liquid oil-and-fat mixture containing a solid oil and a liquid oil without separating the solid fat from the liquid oil and, more preferably, without producing hard coarse crystals of the fat and/or the oil.

As is obvious from the details of the production method of the present invention or the property adjusting method of the present invention described above, the solid oil-and-fat-containing composition of the present invention can also be defined as a solid oil-and-fat-containing composition containing a solid fat, a liquid oil, and a cellulose, and the liquid oil is hardened in a state of being mixed with the solid fat without separating from the solid fat. Other details, such as the types and ratios of the respective components such as the solid fat, the liquid oil, and the cellulose, can be understood from the detailed descriptions above.

The production method of the present invention and the property adjusting method of the present invention make it possible to freely control various properties of the solid oil-and-fat-containing composition by changing and combining various conditions, e.g.: the type of the solid fat; the type of the liquid oil; the mixing ratio of the solid fat and the liquid oil; use of one or more other ingredient(s)/material(s) and the mixing ratio(s) thereof; the amount of cellulose added; use of a cellulose-containing composition and the additive amount thereof; and use of water and the additive amount thereof. Various modes of the solid oil-and-fat-containing composition can also be achieved by adding various external factors thereto. Therefore, the solid oil-and-fat-containing composition of the present invention is deemed to have various uses and effects.

Examples of common uses and effects in applications for both edible and non-edible products include:
replacement of rare solid fats with liquid oils, such as partial replacement of cocoa butter and palm oil used for chocolate with liquid oil, which will serve to reduce the amounts of solid fat used, reduce the involved costs, improve the work efficiency by reducing the volume of solid fat to be dissolved, protect the environment and thereby improve the product and corporate image (e.g., general foods, cosmetics, pharmaceuticals, machine oils, etc.);
improvement in usability and durability of conventional fat and oil that were easy to drip and inconvenient to use, by hardening them (e.g., salad dressing, machine lubricating oil, etc.); and
improvement in stability of conventional liquid oil that were weak against oxidation and heating, by hardening them (e.g., for suppressing generation of oxidative odor due to oxidative deterioration).

Examples of applications for edible products include:
health improvement via substitution for hydrogenated, hardened oil containing trans fatty acid.
improvement of the flavor of foods via partial substitution for solid fats such as palm oil, which is used for any foods and accompanies a unique strong flavor;
improvement of the flavor of foods conventionally cooked using palm oil, such as fried foods;
health improvement by suppressing lipid absorption via hardening of liquid oils;
use as tabletop solid fats, such as additives for tea or soup;
cost reduction via direct solidification of fish oil containing DHA and EPA;
powdered or granulated forms of liquid seasonings containing oil and/or fat, such as parmesan cheese and sprinkles;
health improvement of solid fat by increasing the proportion of liquid oil with low cholesterol content;
use as solid fat containing health functional ingredients (e.g., polyphenols of olive oil, etc.);
imparting intestinal regulating effects to solid fat by adding cellulose;
substitution for fat in artificial marbled meat, artificial large tuna, vegetable hamburger, etc., in the production of halal foods, vegetarian foods, or vegan foods;
preparation of fresh cream, whipped cream, ice cream, margarine, fat spread, etc., that can be served at room temperature;
preparation of roux and solid soup stock cube with excellent dispersibility in hot and cold water;
solidification of liquid seasonings containing oil and/or fat; and
prevention of separation of oil-water separation type dressing via solidification.

More specifically, spread is mentioned as an example of a specific food product of the solid oil-and-fat-containing composition. Generally, in order to provide a food such as spread with shape stability or adjust the degree of its shape stability, special solid oil and/or fat having different melting points (e.g., palm oils having medium melting points to low melting points, etc.) have to be used, which are very inconvenient to handle. In contrast, the present invention is advantageous since when hardening a liquid oil-and-fat mixture in the presence of an oil-and-fat hardening agent containing cellulose, the properties (shape stability) of foods (e.g., spread) can be adjusted freely, by changing parameters such as the percentage of the solid fat in the liquid oil-and-fat mixture and the percentage of the cellulose to the liquid oil-and-fat mixture. Using a natural material such as a plant powder as the oil-and-fat hardening agent provides further advantages, since it provides the solid oil-and-fat-containing composition with smooth and sufficient spreadability and excellent usability.

Thus, the present disclosure includes, for example, the following inventions (1) and (2).
(1) A method of producing a solid oil-and-fat-containing food (e.g., spread foods) containing a solid fat, which is solid at a specific temperature within a range of from -20°C to 40°C (e.g., cacao butter), and a liquid oil, which is liquid at the specific temperature (e.g., olive oil), wherein the method includes hardening a liquid oil-and-fat mixture containing the solid fat and the liquid oil in the presence of an oil-and-fat hardening agent containing cellulose (e.g., plant powder).
(2) A solid oil-and-fat-containing food (e.g., spread foods) comprising a solid fat, which is solid at a specific temperature within a range of from -20°C to 40°C (e.g., cacao butter), and a liquid oil, which is liquid at the specific temperature (e.g., olive oil), wherein the food has been prepared via hardening the liquid oil-and-fat mixture containing the solid fat and the liquid oil in the presence of an oil-and-fat hardening agent containing cellulose (e.g., plant powder).

Examples of applications for non-edible products include:
health improvement via substitution for mineral oil, which are often used in cosmetics and medicines (e.g., petrolatum, cosmetics, pharmaceuticals, toothpastes, etc.);
based on its properties of not melting at low temperatures while melting well with high dispersibility as the temperature rises, uses as oil retaining creams for leather, friction reducing agents for skis and surfboards, antifreezing agents, anticorrosive agents, protective agents for felled trees, suppositories, skin care agents, safe and secure paints and crayons;
based on its property of lowering the temperature when melting, uses as lubricating oil for machinery;
uses as biofouling prevention agents (e.g., ship bottom paints);
based on its flexibility in adjusting its properties freely, uses as electric insulating oil and curing inhibitors that do not drip (e.g., putty and clay); and.
uses as portable ignition powders and portable fuels.

### EXAMPLES

The present invention will now be described in more detail by referring to the examples below. However, these examples are provided simply for convenience of explanation, and the present invention should not be limited to these examples in any way.

### [Example 1] Screening for oil-and-fat hardening agents

In this example, screening was carried out for oil-and-fat hardening agents that can harden a liquid oil-and-fat mixture containing a solid oil and a liquid oil. High-melting-point palm oil (melting points 42 to 48°C, manufactured by Kaneda Oil Co., Ltd.) was selected as a solid fat which is solid at 20°C, and olive oil (commercially available) was selected as a liquid oil which is liquid at 20°C. The mass mixing ratio between the solid fat to the liquid oil was set to 4:6. The solid fat and the liquid oil were preliminarily heated and liquefied in a hot bath at 70°C, and then mixed to prepare a liquid oil-and-fat mixture. The raw materials shown in Table 1 below were used as candidate raw materials for the oil-and-fat hardening agents having the property of hardening the liquid oil-and-fat mixture. Each raw material was micronized to such a small particle size that the texture and feel were not rough, and then added at a ratio of 10% by mass to the liquid oil-and-fat mixture. The liquid oil-and-fat mixture and the raw material were each weighed in a stainless steel bowl, and thoroughly mixed with a spatula until they became uniform without lumps. The obtained mixture was poured into a silicon mold having a length of 5 cm, a width of 10 cm, and a depth of 1 cm, and allowed to stand at 20°C overnight. The mixture was recovered thereafter and subjected to the following evaluations.

Each mixture after standing was evaluated for four evaluation items: hardness (evaluation item 1); presence of coarse crystals derived from oil and/or fat (evaluation item 2); separability of the liquid oil (evaluation item 3); and comprehensive evaluation (evaluation item 4). The hardness (evaluation item 1) and the presence of coarse crystals derived from oil and/or fat (evaluation item 2) were each evaluated on a scale of 1 to 5 as described below, based on the texture and the feel. The separability of the liquid oil (evaluation item 3) was evaluated visually on a scale of 1 to 5 described below, after the mixture was wrapped in a transparent wrap film for food and left for several hours. The comprehensive evaluation (evaluation item 4) was made on a scale of 1 to 5 described below, by considering all of the evaluation items 1 to 3 above comprehensively, and also taking into consideration the state of the mixture which could not be evaluated by these evaluation items. Each evaluation was made by 6 professional panelists, and the average of the scores of the 6 panelists (rounded to the nearest whole number) was determined as the evaluation score.

### (Evaluation item 1: hardness)

5: Had the same levels of hardness and shape stability as those of the control (the solid fat alone).
4: Slightly softer than the control (the solid fat alone), but had sufficient shape stability.
3: Softer than the control (the solid fat alone), but still had some shape stability which was within an acceptable range.
2: Softer and less in shape stability than the control (the solid fat alone).
1: Remarkably softer than the control (the solid fat alone) or not hardened and had no shape stability.

### (Evaluation item 2: presence of coarse crystals derived from oil and/or fat (roughness))

5: Very smooth, with no particulate crystals recognized at all, based on the texture and/or the feel.
4: Smooth, with few particulate crystals recognized, based on the texture and/or the feel.
3: Partially rough, with a few particulate crystals recognized, but overall smooth and acceptable, based on the texture and/or the feel.
2: Rough, with some particulate crystals recognized, based on the texture and/or the feel.
1: Very rough, with a lot of particulate crystals obviously recognized, based on the texture and/or the feel.

### (Evaluation item 3: separation of the liquid oil)

5: No gloss or separation of the liquid oil observed.
4: Some gloss of the liquid oil recognized on the surface, but almost no separation recognized.
3: Small droplets of the liquid oil observed on the interface with the wrap film, but within the allowable range.
2: Droplets of the liquid oil observed on the interface with the wrap film, and some separation observed.
1: Marked separation of the liquid oil observed, with some liquid oil existing as liquid in the wrap film

### (Evaluation item 4: Comprehensive evaluation)

5: Excellent properties as a hardened product.
4: Good properties as a hardened product.
3: Acceptable properties as a hardened product.
2: Inferior properties as a hardened product.
1: Very poor properties as a hardened product.

The results are shown in Table 2 below.

### [Table 2]

**Table 2**

| | Raw Material | Comments | Evaluation Results | | | | |
|---|---|---|---|---|---|---|---|
| | | | Hardness | Roughness | Separation of Comprehensive liquid oil evaluation | | Comments |
| Comparative Example 1 | None | Control: Palm oil allone (solid fat alone)" | --- | --- | --- | --- | Hard solid |
| Comparative Example 2 | None | --- | 1 | 1 | 1 | --- | Liquid |
| Test Example 1 | Cellulose | NP Fiber W-100F (Nippon Paper Industries) | 5 | 5 | 5 | 5 | --- |
| Comparative Example 3 | Pectin | Apple Yura (Sigma) | 2 | 1 | 1 | 2 | Precipitate |
| Comparative Example 4 | Dextrin | PA index # 100 (Matsuya Chemical Industry) | 4 | 1 | 4 | 2 | --- |
| Comparative Example 5 | High Molecule Starch | Waxy Com Starch WCS-250 (Takai Food Industry | 4 | 1 | 4 | 2 | --- |
| Comparative Example 6 | Glutinous rice powder | Commercially available | 3 | 1 | 4 | 1 | --- |
| Comparative Example 7 | Non-glutinous rice powder | Commercially available | 4 | 1 | 4 | 2 | --- |
| Comparative Example 8 | Wheat flour (soft) | Commercially available | 2 | 1 | 2 | 1 | --- |

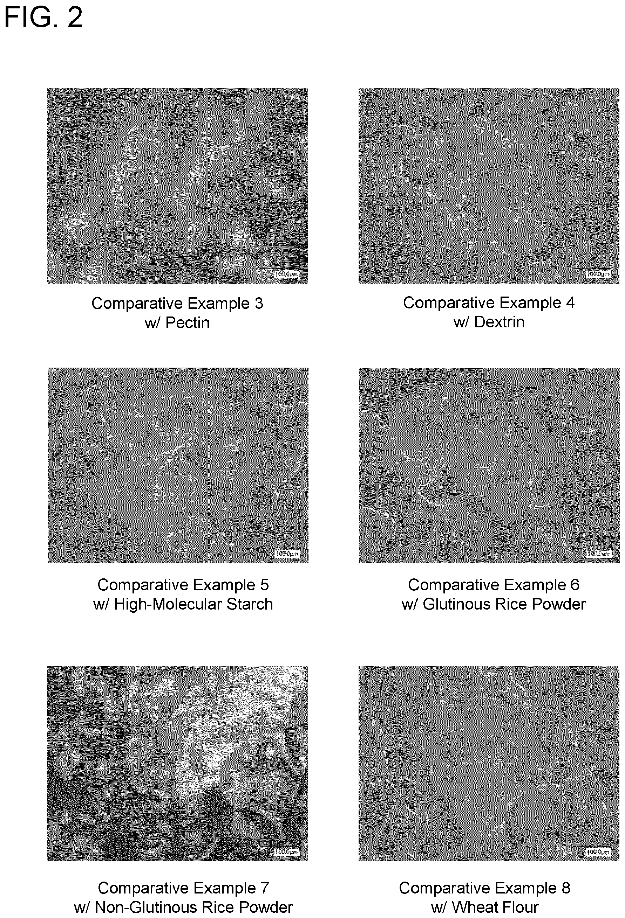

According to Comparative Example 2, in which no raw material was added, the liquid oil was soft and the surface was remarkably rough, with the liquid oil separated. Microscopic observation of the surface revealed remarkably large coarse crystals derived from the solid fat and large voids between them (see Comparative Example 2 in FIG. 1). These results suggest that the solid oil formed coarse crystals with excluding the liquid oil into the voids between them, thereby causing separation. On the other hand, according to each example in which cellulose was added, neither coarse crystals derived from the solid fat nor large voids between them were observed. Instead, densely-packed fine crystals of oil and/or fat were observed, with no large gaps found between them (see Test Example 1 in FIG. 1). These results suggest that the liquid oil was confined within the fine crystals due to the action of, e.g., surface tension, thereby preventing the separation of the liquid oil. The liquid oil-and-fat mixture was also hardened in some examples where dextrin, high-molecular starch, glutinous rice flour, and non-glutinous rice flour were used instead of cellulose. However, use of pectin caused a precipitate of its particles at the bottom, and use of dextrin, high-molecular starch, glutinous rice flour, non-glutinous rice flour, and wheat flour each resulted in easily recognizable roughness and formation of coarse crystals of palm oil (see FIG. 2), Thus, the overall evaluation for each of the non-cellulose material was inferior. These results suggested that cellulose was effective as an agent for hardening a liquid oil-and-fat mixture.

### [Example 2] Study on the range of mass mixing ratios between the solid fat and the liquid oil

It was found in Example 1 that cellulose effectively acted as an agent for hardening a mixture of the solid fat and the liquid oil at a mass mixing ratio of 4:6. This example was intended to determine the range of mass mixing ratios between the solid fat and the liquid oil within which cellulose could act as a hardening agent. Experiments and evaluations were carried out in the same manner as in Example 1, except that 25% by mass of cellulose (NP fiber W-100F (manufactured by Nippon Paper Industries Co., Ltd.)) was added to different mixtures of the solid fat and the liquid oil at various mass ratios shown in Table 3 below.

The results are shown in Table 3 below.

### [Table 3]

**Table 3**

| | Mass mixing ratio | | | Evaluation Results | | | | |
|---|---|---|---|---|---|---|---|---|
| | Solid fat | Liquid oil | Comments | | | | | |
| | Palm oil | Olive oil | | Hardness | Roughness | Separation of liquid oil | Comprehensive evaluation | Comments |
| Comparative Example 9 | 100 | 0 | Control (Solid fat alone) | --- | --- | --- | --- | --- |
| Test Example 2 | 95 | 5 | --- | 5 | 5 | 5 | 5 | --- |
| Test Example 3 | 90 | 10 | --- | 5 | 5 | 5 | 5 | When no cellulose was added, some roughness occurred |
| Test Example 4 | 80 | 20 | - | 5 | 5 | 5 | 5 | When no cellulose was added, roughness occurred |
| Test Example 5 | 70 | 30 | --- | 5 | 5 | 5 | 5 | Same as above |
| Test Example 6 | 60 | 40 | --- | 5 | 5 | 5 | 5 | Same as above |
| Test Example 7 | 50 | 50 | --- | 4 | 4 | 4 | 4 | When no cellulose was added, roughness occurred, with no shape stability exhibited |
| Test Example 8 | 40 | 60 | --- | 4 | 4 | 4 | 4 | Same as above |
| Test Example 9 | 30 | 70 | --- | 4 | 4 | 4 | 4 | Same as above |
| Test Example 10 | 20 | 80 | --- | 4 | 4 | 4 | 4 | Same as above |
| Test Example 11 | 15 | 85 | --- | 4 | 3 | 3 | 3 | Same as above |
| Test Example 12 | 10 | 90 | --- | 3 | 3 | 3 | 3 | Same as above |

The mixing ratio (mass ratio) of the solid fat and the liquid oil in the present invention may be arbitrarily set by adjusting various conditions not specified in the example, such as the additive amount of cellulose, the combination of various solid fats and the various liquid oils, and the mixing ratios thereof. However, in order to produce a hardened mixture having shape stability, forming no hard coarse crystals, being smooth, and causing no separation of the liquid oil, it is deemed from this example that the preferred range is as follows. Assuming the total mass of the mixture of the solid fat and the liquid oil is 100% by mass, the lower limit of the mixing ratio of the solid fat may be at any value higher than 0% by mass, but may preferably be 5% by mass or more, more preferably 10% by mass or more, even more preferably 15% by mass or more, particularly preferably 20% by mass or more. The upper limit of the mixing ratio of the solid fat may be at any value lower than 100% by mass, but considering the objects of the present invention (e.g., substitution for a solid fat and solidification of a liquid oil), it may preferably be 95% by mass or less, more preferably 90% by mass or less.

### [Example 3] Study on the range of the additive amount of cellulose

Cellulose was added as an oil-and-fat hardening agent to a mixture of a solid fat and a liquid oil in an amount of 10% by mass in Example 1, and 25% by mass in Example 2. This example was intended to determine the range of the additive amount of cellulose within which it exerts functions and effects as an oil-and-fat hardening agent. Experimental operations were carried out in the same manner as in Examples 1 and 2, except that the mass mixing ratio of the solid fat and the liquid oil was fixed at 4:6, and the additive amount of cellulose was varied as shown in Table 4 below. Evaluations were carried out in the same manner as in Example 1.

The results are shown in Table 4 below.

### [Table 4]

**Table 4**

| | Additive amount of cellulose (%) | Comments | Evaluation Results | | | | |
|---|---|---|---|---|---|---|---|
| | | | Hardness | Roughness | Separation of liquid oil | Comprehensive Evaluation | Comments |
| Comparative Example 10 | 0 | Control (Palm oil alone) | --- | --- | --- | --- | --- |
| Test Example 13 | 2 | --- | 3 | 4 | 3 | 3 | --- |
| Test Example 14 | 2.5 | --- | 4 | 4 | 4 | 4 | --- |
| Test Example 15 | 3 | --- | 5 | 5 | 5 | 5 | --- |
| Test Example 16 | 5 | --- | 5 | 5 | 5 | 5 | --- |
| Test Example 17 | 10 | --- | 5 | 5 | 5 | 5 | --- |
| Test Example 18 | 15 | --- | 5 | 5 | 5 | 5 | - |
| Test Example 19 | 20 | --- | 5 | 5 | 5 | 5 | --- |
| Test Example 20 | 25 | --- | 5 | 5 | 5 | 5 | --- |
| Test Example 21 | 30 | --- | 5 | 5 | 5 | 5 | --- |
| Test Example 22 | 32.5 | --- | 5 | 5 | 5 | 4 | Caused an aggregate state of small particles |
| Test Example 23 | 35 | Needed labor for mixing, but acceptable | 4 | 5 | 5 | 3 | Caused an aggregate state of small lumps |

The range of the additive amount of cellulose within which it exerts functions and effects as the oil-and-fat hardening agent of the present invention may be arbitrarily set by adjusting various conditions not specified in the example, surch as the combination of various solid fats and the various liquid oils, and the mixing ratios thereof. In order to produce a hardened mixture having shape stability, forming no hard coarse crystals, being smooth, and causing no separtion of the liquid oil, it is deemed from this example that the preferred range is as follows. With respect to the total mass of the solid fat and the liquid oil, the lower limit of the additive amount of cellulose may preferably be 2% by mass or more, more preferably 2.5% by mass or more, even more preferably 3% by mass or more, while the upper limit may preferably be 35% by mass or less, more preferably 32.5% by mass or less, even more preferably 30% by mass or less, from the viewpoint of easy mixing operations and desired properties of the resulting solid oil-and-fat-containing composition.

### [Example 4] Study on the range of the average particle diameter of cellulose

In Examples 1, 2, and 3, cellulose was used as the oil-and-fat hardening agent, and the average particle size of cellulose was set to 28 µm. This example was intended to determine the range of the average particle size within which cellulose can act as the oil-and-fat hardening agent. Experimental operations were carried out in the same manner as in Examples 1 and 2, except that the mass mixing ratio of the solid fat and the liquid oil was fixed to 4:6, while various cellulose-containing compositions having different average particle diameters shown in Table 5 below were each added as a cellulose-containing material dry powder in an amount of 25% by mass.. Evaluations were carried out in the same manner as in Example 1. The average particle size of cellulose was measured using distilled water as a solvent for measurement, and also using a laser diffraction particle size distribution analyzer, Microtrac MT3300 EXII system, manufactured by Microtrac Bell Co., Ltd., and DMS2 as measurement application software. The particle size (d₅₀) measured by (Data Management System version2, Microtrac Bell Co., Ltd.) was taken as the average particle size.

The results are shown in Table 5 below.

### [Table 5]

**Table 5**

| | Raw Material | Particle diameter | Comments | Evaluation Results | | | | |
|---|---|---|---|---|---|---|---|---|
| | | | | Hardness | Roughness | Separation of liquid oil | Com prehensive Evaluation | Comments |
| Comparative Example 11 | None | Control (Palm oil alone) | --- | --- | --- | --- | --- | --- |
| Test Example 24 | Corn flour | 0.5pm | Fine corn powder (Mikasa Sangyo) was micronized with olive oil (commercially available) via bead mill treatment (olive oil: corn powder = 1:1 (mass ratio)) (for a long time, circulation) | 5 | 5 | 5 | 5 | The finer the raw material, the harder the oil-and-fat-containing composition. |
| Test Example 25 | Corn flour | 1µm | Same as above (for a short time, corculation) | 5 | 5 | 5 | 5 | |
| Test Example 26 | Corn flour | 10µm | Same as above (for a short time, one pass) | 5 | 5 | 5 | 5 | |
| Test Example 27 | Cellulose | 28µm | NP 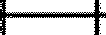 W-100F (Nippon Paper Industries) | 5 | 5 | 5 | 5 | --- |
| Test Example 28 | Corn flour | 50µm | Fine powder (Mikasa Sangyo) | 5 | 5 | 5 | 5 | --- |
| Test Example 29 | Soybean refuse (okara) powder | 100µm | Okara powder (Otofu Kobo Ishikawa) | 4 | 4 | 4 | 4 | Roughness was soft and appeared to be derived from the raw material. |
| Test Example 30 | Ground sesame seeds powder | 250µm | Ground sesame seeds (Shinsei, mesh sieve pass part 1) | 4 | 3 | 4 | 4 | Roughness was soft and appeared to be derived from the raw material. |
| Test Example 31 | Ground sesame seeds powder | 425µm | Ground sesame seeds (Shinsei, mesh sieve pass part 2) | 3 | 3 | 3 | 3 | Same as above, but also included hard coarse crystals derived from oil and fat. |
| Comparative Example 12 | Ground sesame seeds powder | 800µm | Same as above (Shinsei, mesh sieve on part) | 2 | 2 | 2 | 2 | Same as above |

The average particle size of cellulose that can function as the oil-and-fat hardening agent of the present invention may be arbitrarily set by adjusting various conditions not specified in the example, such as the combination of various solid fats and the various liquid oils, and the mixing ratios thereof. However, it can be understood from this example that finer cellulose particles are better since they give harder compositions. However, from the viewpoint of safety concern involved in nanomaterials, the lower limit may preferably be 0.3 µm or more, more preferably 0.5 µm or more, still more preferably 1.0 µm or more. The upper limit may preferably be 400 µm or less, more preferably 250 µm or less, still more preferably 100 µm or less, for producing a hardened mixture having shape stability, forming no hard coarse crystals, being smooth, and causing no separation of the liquid oil. It can also be understood from this example that a material containing cellulose (cellulose-containing composition) also exerts the effects intended in the present invention.

The cellulose-containing compositions used in Test Examples 24, 25, and 26 were prepared by wet pulverizing corn flour in oil and/or fat, while the cellulose-containing composition used in Test Example 28 was not wet pulverized. It can be understood from these examples that the smaller the average particle size, the harder and smoother the prepared solid oil-and-fat-containing composition, and the more unlikely the separation of the liquid oil occurs. This is presumably because the composition containing finely divided particles of the cellulose-containing composition were kneaded with the oil and/or fat by the wet pulverizing treatment, and the surface layer of each particle was coated with the oil and/or fat, so that the particles became more intimately mixable with the oil-and-fat mixture and the homogeneity of the mixture was further enhanced, whereby the action and effect of the present invention were more strongly exhibited.

### [Example 5] Study on the influence of cellulose-containing materials on the effects of the present invention

In Example, cellulose preparations and several plant-derived cellulose-containing compositions were tested for their effects as oil-and-fat hardening agents. This example was intended to screen various biologically derived cellulose-containing compositions having different origins shown in Table 6 below for their effects as oil-and-fat hardening agents. Each material was micronized to have an average particle size of less than 100 µm before use. Experimental operations were carried out in the same manner as in Examples 1 and 2, except that the mass mixing ratio of the solid fat and the liquid oil was fixed to 4:6, and 30 mass% of each was added as a cellulose-containing material dry powder for evaluation. Evaluations were carried out in the same manner as in Example 1.

The results are shown in Table 6 below.

### [Table 6]

**Table 6**

| | Raw Material | Comments | Evaluation Results | | | | |
|---|---|---|---|---|---|---|---|
| | | | Hardness | Roughness | Separation of liquid oil | Comprehensive evaluation | Comments |
| Comparative Example 13 | None | --- | --- | --- | --- | --- | --- |
| Test Example 32 | Nata de coco powder | Acetobacter product was freeze-dried and pulverized. | 5 | 5 | 5 | 5 | --- |
| Test Example 33 | Marbled oyster mushroom powder | Commercially available product was air-dried at room temperature and then pulverized. | 5 | 5 | 5 | 5 | --- |
| Test Example 34 | Shiitake mushroom powder | Commercially available product was heat-dried and then pulverized. | 5 | 5 | 5 | 5 | --- |
| Test Example 35 | Cellulose powder | NP fiber W-100F (Nippon Paper Industries, wood-derived purified product) | 5 | 5 | 5 | 5 | --- |
| Test Example 36 | Wood powder | Commercially available cedar wood was dry pulverized. | 5 | 5 | 5 | 5 | --- |
| Test Example 37 | Komatsuna (Japanese mustard spinach) powder | Fine powder (Mikasa Sangyo) | 5 | 5 | 5 | 5 | --- |
| Test Example 38 | Carrot powder | Fine powder (Mikasa Sangyo) | 5 | 5 | 5 | 5 | --- |
| Test Example 39 | Yuzu peel powder | Fine powder (Mikasa Sangyo) | 5 | 5 | 5 | 5 | --- |

As a result, the effects intended in the present invention were confirmed for all the materials shown in the table. Specifically, it was confirmed that cellulose-containing compositions derived from a microorganism (acetobactel product), mushrooms, wood (with or without purification), and plants (regardless of types) were effective as the oil-and-fat hardening agents of the present invention a fat curing agent. It could also be deduced from this example that materials derived from animals which contain cellulose in their outer skins, such as squirts and algae, also have similar effects.

### [Example 6] Study on the effect of oil-and-fat hardening agents on various solid fats and various liquid oils

In Examples 1 to 5, olive oil was selected as a representative of solid fats, and high-melting point palm oil was selected as a representative of liquid oils. This example was intended to confirm whether or not other solid fats and liquid oils shown in Tables 7-1 and 7-2 below also exhibited similar effects as cellulose. The mixing ratio of these oils and fats and the amount of cellulose added were also varied as shown in Tables 7-1 and 7-2. Other experimental operations were carried out in the same manner as in Examples 1 and 2, and evaluations were carried out in the same manner as in Example 1. When using cocoa butter, a tempering machine (melting & tempering machine mini-revolution FV-68 (FITTECH sales)) was used for tempering operation (the temperature was changed from 42°C to 29°C to 32°C while stirring the mixture). Changed).

The results are shown in Tables 7-1 and 7-2 below.

### [Table 7-1]

**Table 7-1**

| | Solid fat | | Liquid oil | | Additive amount of cellulose (mass %) | Evaluation Results | | | | |
|---|---|---|---|---|---|---|---|---|---|---|
| | Selection | Mass mixing ratio | Selection | Mass mixing ratio | | Hardness | Roughness | Separation of liquid oil | Comprehensive Evaluation | Comments (at 20°C unless otherwise specified) |
| Comparative Example 14 | Extra-high melting point Palm oil (melting point 48 to 50°C) | 100 | Olive oil | 0 | None (Control) | --- | --- | --- | --- | Hard solid |
| Test Example 40 | | 90 | | 10 | 10 | 5 | 5 | 5 | 5 | Hard solid |
| Test Example 41 | | 80 | | 20 | 10 | 4 | 5 | 5 | 5 | Relatively soft solid |
| Test Example 42 | | 70 | | 30 | 25 | 3 | 5 | 5 | 5 | Whipped cream-like state, with suppressed flavor of palm oil |
| Comparative Example 15 | Low melting point palm oil (melting point: 34 to 40°C) | 100 | Olive oil | 0 | None (Control) | --- | --- | --- | --- | Hard solid |
| Test Example 43 | | 90 | | 10 | 10 | 4 | 5 | 5 | 5 | Relatively soft solid |
| Test Example 44 | | 70 | | 30 | 10 | 3 | 5 | 5 | 5 | Rough cream-like state, with suppressed flavor pecular to palm oil (addition of 5% by mass of water gave a smooth cream) |
| Comparative Example 16 | Cacao butter (melting point 32 to 36°C) | 100 | Olive oil | 0 | None (Control) | --- | --- | --- | --- | Hard solid |
| Test Example 45 | | 90 | | 10 | 10 | 5 | 5 | 5 | 5 | Hard solid |
| Test Example 46 | | 70 | | 30 | 10 | 5 | 5 | 5 | 5 | Hard solid, with suppressed flavor pecular to cacao butter |
| Test Example 47 | | 50 | | 50 | 10 | 4 | 5 | 4 | 4 | Relatively soft solid, with suppressed flavor pecular to cacao butter |
| Comparative Example 17 | Coconut oil (melting point: about 24°C) | 100 | Olive oil | 0 | None (Control) | --- | --- | --- | --- | Hard solid (10°C) |
| Test Example 48 | | 90 | | 10 | 10 | 4 | 5 | 5 | 5 | Relatively soft solid (10°C) |
| Comparative Example 18 | High melting point palm oil (melting point: 42 to 48°C) | 100 | --- | 0 | None (Control) | --- | --- | --- | --- | Hard solid |
| Test Example 49 | | 40 | Sesami oil | 60 | 10 | 5 | 5 | 5 | 5 | Hard solid, with suppressed flavor pecular to palm oil |
| Test Example 50 | | 40 | Soybean oil | 60 | 10 | 4 | 5 | 5 | 4 | Relatively soft solid, with suppressed flavor pecular to palm oil |
| Test Example 51 | | 40 | Rapeseed oil | 60 | 10 | 4 | 5 | 5 | 4 | Relatively soft solid, with suppressed flavor pecular to palm oil |
| Test Example 52 | | 40 | Olive oil | 60 | 25 | 5 | 5 | 5 | 5 | Hard solid, with suppressed flavor pecular to palm oil, (addition of 10 mass % of water gave a gel-like state) |
| Test Example 53 | | 40 | Algal oil | 60 | 10 | 4 | 5 | 5 | 4 | Relatively soft solid, with suppressed flavor pecular to algal oi, |
| Test Example 54 | | 40 | Fish oil | 60 | 10 | 5 | 5 | 5 | 5 | Hard solid, with suppressed flavor pecular to fish oil. |
| Test Example 55 | High melting point palm oil (melting point 42 to 48°C) | 20 | Chicken oil | 60 | 17 | 4 | 5 | 5 | 4 | Relatively soft solid, with suppressed flavor pecular to beef tallow and chicken oil. |
| | Beef tallow | 20 | | | | | | | | |
| Test Example 56 | High melting point palm oil (melting point 42 to 48°C) | 20 | Fish oil | 30 | 17 | 5 | 5 | 5 | 5 | Hard solid, with suppressed flavor pecular to fish oil. |
| | Cacao butter | 20 | Chicken oil | 30 | | | | | | |

### [Table 7-2]

**Table 7-2**

| | Solid fat | | Liquid oil | | Additive amount of cellulose (mass %) | Evaluation Results | | | | |
|---|---|---|---|---|---|---|---|---|---|---|
| | Selection | Mass mixing ratio | Selection | Mass mixing ratio | | Hardness | Roughness | Separation of liquid oil | Comprehensive Evaluation | Comments (at 20°C unless otherwise specified) |
| Comparative Example 19 | Ghee | 100 | Olive oil | 0 | None(Control) | --- | --- | --- | --- | Hard solid |
| Test Example 57 | | 90 | | 10 | 10 | 4 | 4 | 4 | 4 | Relatively soft solid |
| Comparative Example 20 | Lard | 100 | Olive oil | 0 | None(Control) | --- | --- | --- | --- | Hard solid (10°C) |
| Test Example 58 | | 80 | | 20 | 10 | 5 | 5 | 5 | 5 | Hard solid (10°C) |
| Test Example 59 | | 70 | | 30 | 10 | 4 | 5 | 4 | 4 | Relatively soft solid (10°C), with suppressed flavor pecular to lard |
| Comparative Example 21 | Butter | 100 | Olive oil | 0 | None(Control) | --- | --- | --- | --- | Hard solid (10°C) |
| Test Example 60 | | 90 | | 10 | 10 | 5 | 5 | 5 | 5 | Hard solid (10°C) |
| Test Example 61 | | 70 | | 30 | 10 | 5 | 5 | 5 | 5 | Hard solid (10°C). with suppressed flavor pecular to butter |
| Test Example 62 | | 50 | | 50 | 10 | 5 | 5 | 5 | 5 | Hard solid (10°C), with suppressed flavor pecular to butter |
| Test Example 63 | | 30 | | 70 | 10 | 4 | 5 | 4 | 4 | Relatively soft solid (10°C). with suppressed flavor pecular to butter |
| Comparative Example 22 | High melting point palm oil (melting point: 42 to 48°C) | 100 | Purified fish oil | 0 | None(Control) | --- | --- | --- | --- | Hard solid |
| Test Example 64 | | 40 | | 60 | 10 | 5 | 5 | 5 | 5 | Hard solid, with suppressed flavor pecular to palm oil |
| Comparative Example 23 | Ghee | 100 | Purified fish oil | 0 | None(Control) | --- | --- | --- | --- | Hard solid |
| Test Example 65 | | 70 | | 30 | 10 | 4 | 5 | 4 | 4 | Relatively soft solid, with suppressed flavor pecular to ghee |
| Comparative Example 24 | Cacao butter (melting point: 32 to 36°C) | 100 | Olive oil (derived from wet pulverized corn powder) | 0 | None(Control) | --- | --- | --- | --- | Hard solid |
| Test Example 66 | | 70 | | 30 | 15, | 5 | 5 | 5 | 5 | Hard solid |
| Test Example 67 | | 70 | | 30 | as pulverized powder of corn (wet pulverized product of corn flour in olive oil, | 4 | 5 | 5 | 5 | Suppressed flavor pecular to cacao butter (addition of 5% by mass of water gave a putty-like state) |
| Test Example 68 | | 70 | | 30 | corn flour : alive oil (mass ratio) = 1 1) | 3 | 5 | 5 | 5 | Suppressed flavor pecular to cacao butter (addition of 10% by mass of water gave a cream-like state) |
| Comparative Example 25 | Cacao butter (melting point: 32 to 36°C) (derived from corn powder via wet pulverizing treatment in heat-melted cocoa butter) | 100 | Olive oil | 0 | None(Control) | --- | --- | --- | --- | Hard solid |
| Test Example 69 | | 70 | | 30 | | 5 | 5 | 5 | 5 | Hard solid |
| Test Example 70 | | 70 | | 30 | 35, as pulverized powder of corn (wet pulverized product of corn flour in olive oil, | 4 | 5 | 5 | 4 | Suppressed flavor pecular to cacao butter (addition of 5% by mass of water gave an aggregate state of 2mm lumps) |
| Test Example 71 | | 70 | | 30 | corn flour : olive oil (mass ratio) = 1:1) | 3 | 5 | 5 | 3 | Suppressed flavor pecular to cacao butter (addition of 15% by mass of water gave an aggregate state of 5mm lumps) |

It can be understood from these results that the oil-and-fat hardening agents of the present invention (both as cellulose and a cellulose-containing composition) always exhibit the effects intended in the present invention, regardless of whether the solid fat and/or the liquid oil were derived from plants or animals or any combinations of these. It can also be understood that the physical properties of the prepared solid-oil-and-fat-containing composition may exhibit various modes depending on the amount of cellulose added and the presence or absence and the amount of water added. For example, when high-melting-point palm oil (melting points 42 to 48°C) used as a solid fat and olive oil as a liquid oil were mixed in a mass mixing ratio of 4:6, and when 25% by mass of purified cellulose was added as an oil-and-fat hardening agent, then the resultant oil-and-fat-containing composition was a hard solid at 20°C (Test Example 49) (FIG. 3). When 10% by mass of water was further added to this mixture, the resultant composition was a gel (Test Example 52) (FIG. 4). When extra-high-melting-point palm oil (melting points 48 to 50°C) as a solid oil and olive oil as a liquid oil were mixed at a mass mixing ratio of 7:3, and when 10% by mass of purified cellulose was added as an oil-and-fat hardening agent, then the resultant oil-and-fat-containing composition was a soft whipped cream-like composition at 20°C (Test Example 42) (Fig. 5). When low-melting-point palm oil (melting points 34 to 40°C) as a solid fat and olive oil as a liquid oil were mixed at a mass mixing ratio of 7:3, and when purified cellulose was added as an oil-and-fat hardening agent in an amount of 20% by mass, then the resultant oil-and-fat-containing composition was a rough creamy form at 0°C (Test Example 44) (FIG. 6), and when 5% by mass of water was further added to this mixture, then the resultant composition was a smooth creamy form (Test Example 44) (FIG. 7). The compositions prepared in these test examples did not exhibit observable levels of separation of the liquid oil, change in properties (after stored at 30°C for 2 months), and formation of coarse crystals of oil and/or fat, and noticeable level of roughness.

It can be understood from these results that according to the present invention, the properties of the solid oil-and-fat-containing composition as the final product can be adjusted freely, by changing and combining various conditions, e.g.: the type of the solid fat; the type of the liquid oil; the mixing ratio of the solid fat and the liquid oil; use of one or more other ingredient(s)/material(s) and the mixing ratio(s) thereof; the amount of cellulose added; use of a cellulose-containing composition and the additive amount thereof; and use of water and the additive amount thereof. This makes it possible to adjust the properties of the solid oil-and-fat-containing composition to its application, and also to create a novel application of the solid oil-and-fat-containing composition depending on its new properties. It can also be deduced that various modes of the solid oil-and-fat-containing composition can also be achieved by adding various external factors thereto.

### [Example 7] Study on various techniques for producing solid oil-and-fat-containing compositions

The solid fats and the liquid oils used in Examples 1 to 6 did not contain other components or were not mixed with other raw materials. This example was intended to confirm the technical versatility of solid oil-and-fat-containing compositions that can be prepared by applying the effects of the oil-and-fat hardening agent of the present invention.

As shown in Table 8, solid fats and/or liquid oils and cellulose (NP fiber W-100F (manufactured by Nippon Paper Industries)) were added to various commercially-available seasonings containing fat and oil, and the effects thereof were studied. Other experimental operations were carried out in the same manner as in Examples 1 and 2, and evaluations were carried out in the same manner as in Example 1.

The results are shown in Table 8 below.

### [Table 8]

**Table 8**

| | Seasoning | | Additive amount (mass %) | | | | | | Evaluation Results | | | | |
|---|---|---|---|---|---|---|---|---|---|---|---|---|---|
| | Selection | Product name | Seasoning | Solid fat | | Liquid oil | | Cellulose | Hardness | Roughness | Separation of liquid oil | Comprehensive evaluation | Comments (at 20°C unless otherwise specified) |
| | | | | Selection | Additive amount | Selection | Additive amount | | | | | | |
| Comparative Example 26 | - (Control1) | | --- | High melting point Palm oil | 100 | --- | 0 | --- | --- | --- | --- | --- | Extra-hard solid |
| Comparative Example 27 | - (Control2) | | --- | Cacao butter | 100 | --- | 0 | --- | --- | --- | --- | --- | Extra-hard solid |
| Test Example 72 | Pasta sauce (white) | BERTOLLI ALFRED SAUCE | 120 | High melting point Palm oil | 27 | Contained in seasoning (details unknown) | 15% by mass as total lipids in seasoning | 29.4 | 3 | 4 | 5 | 4 | Highly dispersible in hot water |
| Test Example 73 | | | 90 | Cacao butter | 31.5 | | | 18.2 | 4 | 5 | 5 | 5 | Highly dispersible in hot water |
| Test Example 74 | Pasta sauce (red) | A PUITA PESTO ROSSO | 120 | High melting point Palm oil | 27 | Contained in seasoning (details unknown) | 3% by mass as total lipids in seasoning | 22.1 | 3 | 4 | 5 | 4 | Highly dispersible in hot water |
| Test Example 75 | Pasta sauce (red) | RAGU Traditional | 60 | High melting point Palm oil | 27 | Olive oil | 18 | 15.8 | 3 | 4 | 5 | 4 | Highly dispersible in hot water |
| Test Example 76 | | | 90 | Cacao butter | 31.5 | | 13.5 | 20.3 | 4 | 5 | 5 | 5 | Highly dispersible in hot water |
| Test Example 77 | Separate-type liquid dressing | Seijo Ishii Italian dressing | 80 | High melting point Palm oil | 37.6 | Contained in seasoning (details unknown) | 21.5% by mass as total lipids in seasoning | 17.6 | 4 | 5 | 5 | 5 | Suitable for shaving |
| Test Example 78 | Separate-type liquid dressing | Seijo Ishii balsamic dressing | 80 | High melting point Palm oil | 37.6 | Contained in seasoning (details unknown) | 19.8% by mass as total lipids in seasoning | 17.6 | 4 | 5 | 5 | 5 | Suitable for shaving |
| Test Example 79 | Mayonnaise | Kewpie Mayonnaise | 90 | High melting point Palm oil | 31.5 | Contained in seasoning (details unknown) | 74.7% by mass as total lipids in seasoning | 18.2 | 4 | 5 | 5 | 5 | Suitable for shaving |

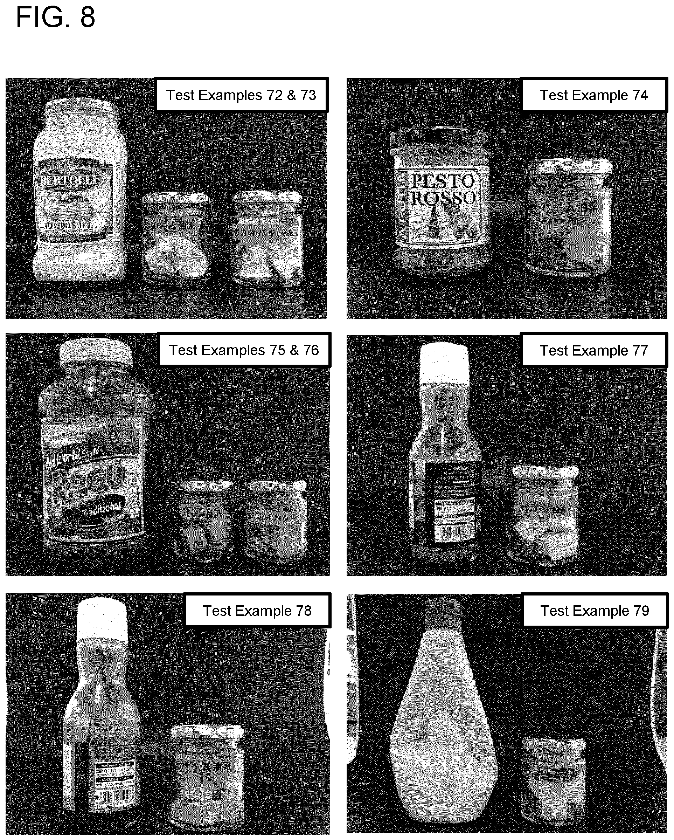

It can be understood from these results that solid seasonings can be prepared by adding solid fats or/and liquid oils and cellulose to various seasonings to hardening them (FIG. 8). For almost all the test examples in Table 8, similar experiments and evaluation were also carried out without adding cellulose, but the results showed that the resultant compositions were either hardened at all, or hardened only partially, i.e., only the solid fat was separated from the seasoning liquid containing the liquid oil and hardened, while the remaining portion was kept in a liquid state.

The prepared solid seasoning in the form of pasta sauce showed excellent melting/dispersing properties when put into hot water. When this pasta sauce was added to cocoa butter and hardened, or when dressing and mayonnaise were hardened, their physical states were particularly hard, and were suitable to be shaved onto a food for seasoning. Each flavor became weaker as it was diluted by adding solid fat or liquid oil to the seasoning, but still could be adjusted by enhancing the seasoning taste according to the mode of use (amount and method of use) of the hardened product. It can also be understood from these results that the types and the total amount of the solid fat and/or the liquid oil to be mixed with the seasoning may be adjusted appropriately. In addition, when these hardened seasonings and seasonings before hardening were stored at 40°C for 1 month, the hardened seasonings showed suppressed generation of oxidative odor, compared with those before hardening. This is presumably because the liquid oil was hardened and thereby shielded from oxygen, resulting in improved storage stability.

As described above, it was confirmed that the technique and the effects of the present invention have excellent versatility and are usable and applicable in various scenes of food processing, and the prepared solid oil-and-fat-containing composition can also be used in various modes, and that the technique the present invention therefore has enormous versatility.

### [Example 8] Study on preparation of various forms of solid oil-and-fat-containing composition 1

In Example 7, seasonings were used as the main object to be hardened. In the present example, various solid fats and liquid oils shown in Table 9 below were used as the main object to be hardened, and auxiliary materials were added thereto, and the applications of the resultant hardened compositions were examined. Other experimental operations were carried out in the same manner as in Examples 1 and 2, and evaluations were carried out in the same manner as in Example 1.

The results are shown in Table 9 below.

### [Table 9]

**Table 9**

| | Mass mixing ratio | | | | Additive amount (mass %) | | Evaluation Results | | | | |
|---|---|---|---|---|---|---|---|---|---|---|---|
| | Solid fat | | Liquid oil | | Cellulose | Others | Hardness | Roughness | Liquid oilSeparation | Comprehensive Evaluation | Comments (at 20°C unless otherwise specified) |
| | Selection | Additive amount | Selection | Additive amount | | | | | | | |
| Comparative Example 28 | Extra-high melting point palm oil | 100 | --- | 0 | --- | --- | --- | --- | --- | --- | Extra-hard solid |
| Comparative Example 29 | Extra-high melting point palm oil | 70 | Olive oil | 30 | 0 | --- | 2 | 2 | 2 | 2 | Not hardened, liquid oil separated |
| Test Example 80 | Extra-high melting point palm oil | 70 | Olive oil | 30 | 20 | 50 % by mass of commercially available maple syrup added | 3 | 5 | 5 | 5 | Becomes ice cream-like solid when chilled |
| Comparative Example 30 | High melting point palm oil | 100 | Olive oil | 0 | --- | --- | --- | --- | --- | --- | Extra-hard solid Poorly dispersible in hot water (slow, with oil beads floated on the hot water surface) |
| Comparative Example 31 | High melting point palm oil | 40 | Olive oil | 60 | 0 | --- | 2 | 1 | 1 | 1 | Not hardened, liquid oil separated |
| Test Example 9 | High melting point palm oil | 40 | Olive oil | 60 | 30 mass % by mass of commercially available corn flour | | 4 | 5 | 5 | 5 | Highly dispersible in hot and cold water (quick, with powders and oils finely dispersed in hot water), finished like corn soup |

These results show that even when various solid fats and liquid oils were used as the main object to be hardened and when auxiliary materials were added thereto, the technique and effects of the present invention allowed for preparation of an ice cream-like food with a rich flavor, even without using seasoning as the main food, as well as preparation of a corn soup-like processed food excellent in flavor and dispersibility in hot and cold water.

Regarding the dispersibility in hot water mentioned above, a mixture of high-melting palm oil and olive oil in a mass ratio of 4:6 was mixed with 25% by mass of cellulose and hardened to give 1 cm square samples, while 100% high-melting palm oil was also made into 1 cm square samples as comparison. The resultant square samples were put into hot water at 70°C with stirring, whereby their dispersibility was examined. The results are shown in Fig. 9. It can be understood from these results that the dispersibility of the former square samples in hot and cold water is remarkably excellent. This is presumably because the amphipathicity of cellulose serves to enhance dispersion of fats and oils in hot water.

### [Example 9] Study on preparation of various forms of solid oil-and-fat-containing composition 2

This example was intended as detailed study on a specific food example of the solid oil-and-fat-containing composition of the present invention. Various plant powders (natural materials) shown in Table 10 were selected as the oil-and-fat hardening agents, cocoa butter was selected as the solid fat, olive oil was selected as the liquid oil. These components were mixed and wet-micronized, to which other food materials were added, and the mixture was then filled in a container and cooled. The mixture was then returned to room temperature, and evaluation was carried out in the same manner as in Example 1.

The results are shown in Table 10 below.

### [Table 10]

**Table 10**

| | Selection of raw materials | Comparative Example 32 | Test Example 82 | Comparative Example 33 | Test Example 83 | Comparative Example 34 | Test Example 84 | Comparative Example 35 | Test Example 85 |
|---|---|---|---|---|---|---|---|---|---|
| | | Mixing amount (g) | Mixing amount (g) | Mixing amount (g) | Mixing amount (g) | Mixing amount (g) | Mixing amount (g) | Mixing amount (g) | Mixing amount (g) |
| Oil-and-fat hardening agent | Beet powder (as a "whole" containing both the edible and non-edible portions) | 28 | 28 | | | | | | |
| | Corn powder (as a "whole" containing both the edible and non-edible portions) | | | 30 | 30 | | | | |
| | Paprika powder (as a "whole" containing both the edible and non-edible portions) | | | | | 25 | 25 | | |
| | Pea powder (as a "whole" containing both the edible and non-edible portions) | | | | | | | 25 | 25 |
| | Sweet potate powder (edible portion alone) | | | | | 5 | 5 | | |
| Solid fat | Cacao butter | 36,4 | 17 | 35 | 15 | 30 | 15 | 17 | 7.5 |
| | Coconut oil | | | | | | | 17 | 7.5 |
| Liquid oil | Olive oil | | 19.4 | | 20 | | 15 | | 19 |
| Other food materials | Cashew nuts | | | 10 | 10 | | | 20 | 20 |
| | Almonds (with skin) | 20 | 20 | 10 | 10 | 20 | 20 | 20 | 20 |
| | Almond (without skin) | | | 15 | 15 | | | | |
| | Hazelnut (with skin) | 15 | 15 | | | 20 | 20 | | |
| | Raspberry powder | 0.6 | 0.6 | | | | | | |
| | Green tea powder | | | | | | | 1 | 1 |
| Total | | 100 | 100 | 100 | 100 | 100 | 100 | 100 | 100 |
| Evaluation item | Hardness | --- | 4 | --- | 4 | --- | 4 | --- | 4 |
| | Roughness | --- | 5 | --- | 5 | --- | 5 | --- | 5 |
| | Separation of liquid oil | --- | 5 | --- | 5 | --- | 5 | --- | 5 |
| | Comprehensive Evaluation | --- | 5 | --- | 5 | --- | 5 | --- | 5 |
| | Comments | Solid fat alone, as a control | Smoothly spreadable as spread | Solid fat alone, as a control | Smoothly spreadable as spread | Solid fat alone, as a control | Smoothly spreadable as spread | Solid fat alone, as a control | Smoothly spreadable as spread |

It was confirmed from these results that even when various plant powders (natural materials) were used as the oil-and-fat hardening agents for hardening a mixture of the solid fat and the liquid oil, optionally with other food materials, the prepared spreads had sufficient hardness at room temperature and smoothness without roughness, and did not cause separation of the liquid oil. When the prepared spreads were each applied to a loaf of bread, they kept their smoothness while exhibiting sufficient spreadability, indicating that their properties had been adjusted to improve their handleability. Specifically, the spreads remained in a solid state even though they included the liquid oil, and they also exhibited excellent spreadability. These results suggest that the properties could be freely adjusted. On the other hand, in each of the comparative examples containing only solid fat, the prepared spread was extremely hard, and had no spreadability.

As described above, according to the present invention, a solid fat and a liquid oil can be mixed and hardened at low cost without using complicated steps. This enables the use of a liquid oil as a part of a solid oil-and-fat-containing composition while reducing the amount of a solid fat to be used, thereby broadening the versatility of oils and fats in terms of flavor, texture, and properties. Thus, the present invention can effectively contribute to the improvement of eating habits by enhancing the development of the food industry, expanding the possible range of food processing by manufacturers, and responding to various needs of consumers. Furthermore, although not specifically demonstrated in these examples, it is obvious as described above that the present invention also has a wide range of applicability and versatility in general industries other than the food industry, and can effectively contribute to the improvement of people's lives even in the non-food industry field.

### INDUSTRIAL APPLICABILITY

The present invention can be widely used in the field of food industry and any other industrial fields which requires solidification of a mixture of a solid oil and a liquid oil, and therefore has a wide variety of industrial applicability.

## Claims

1. A method of producing a solid oil-and-fat-containing composition which contains a solid fat, which is solid at a specific temperature within a range of from -20°C to 40°C, and a liquid oil, which is liquid at the specific temperature, comprising:
hardening a liquid oil-and-fat mixture, which contains the solid fat and the liquid oil, in the presence of an oil-and-fat hardening agent containing cellulose.

2. The method as defined in claim 1, wherein said hardening of the liquid oil-and-fat mixture includes adding the oil-and-fat hardening agent to the liquid oil-and-fat mixture liquefied under heating, followed by cooling.

3. The method as defined in claim 1 or 2, wherein the percentage of the solid fat relative to the total amount of the solid fat and the liquid oil is 5% by mass or more and less than 100% by mass.

4. The method as defined in any one of claims 1 to 3, wherein the percentage of the cellulose relative to the total amount of the solid fat and the liquid oil is between 2% by mass and 35% by mass, inclusive.

5. An oil-and-fat hardening agent comprising cellulose for use in a method as defined in any one of claims 1 to 4.

6. The oil-and-fat hardening agent as defined in claim 5, wherein the average particle diameter of the cellulose is between 0.3µm and 400µm, inclusive.

7. The oil-and-fat hardening agent as defined in claim 5 or 6, wherein the cellulose is derived from a cellulose-containing natural material.

8. The oil-and-fat hardening agent as defined in claim 7, wherein the natural material is one or more selected from microorganisms, bacteria, and plants.

9. The oil-and-fat hardening agent as defined in claim 8, wherein the plants comprise one or more selected from corn, soybean (edamame), pea (green pea), carrot, pumpkin, kale, paprika, beetroot, broccoli, spinach, tomato, and sweet potato.

10. The oil-and-fat hardening agent as defined in claim 9, comprising a non-edible portion of the plant.

11. The oil-and-fat hardening agent as defined in claim 9 or 10, comprising both an edible portion and a non-edible portion derived from the same kind of plant.

12. The oil-and-fat hardening agent as defined in any one of claims 9 to 11, wherein the non-edible portion comprises one or more selected from: corn bract or pistil or cob; soybean (edamame) pod; pea (green pea) pod; carrot root tip or petiole base; pumpkin pulp or seeds or ends; kale petiole base; paprika hull or core or seeds; beet root tip or peel or petiole; broccoli foliage; spinach rootstock; tomato hull; and sweet potato epidermis or ends.

13. The oil-and-fat hardening agent as defined in any one of claims 7 to 12, wherein the natural material has been subjected to micronization treatment.

14. The oil-and-fat hardening agent as defined in claim 13, wherein the micronization treatment is wet-micronization treatment in oil and fat.

15. A solid oil-and-fat-containing composition obtainable by a method as defined in any one of claims 1 to 4, comprising the solid fat, the liquid oil, and the cellulose.

16. A solid oil-and-fat-containing composition comprising:
a solid fat, which is solid at a specific temperature within a range of from -20°C to 40°C;
a liquid oil, which is liquid at the specific temperature liquid; and
cellulose,
wherein the liquid oil is hardened in the state of being mixed with solid fat, without separating from the solid fat.

17. The solid oil-and-fat-containing composition as defined in claim 16, wherein the percentage of the solid fat relative to the total amount of the solid fat and the liquid oil is between 10% by mass and 100% by mass, inclusive.

18. The solid oil-and-fat-containing composition as defined in claim 16 or 17, wherein the percentage of the cellulose relative to the total amount of the solid fat and the liquid oil is between 2% by mass and 35% by mass, inclusive.

19. The solid oil-and-fat-containing composition as defined in any one of claims 15 to 18, which is in the form of a food.

20. The solid oil-and-fat-containing composition as defined in claim 19, wherein the food is spread.

21. A solid oil-and-fat-containing composition comprising a liquid oil-and-fat mixture a solid fat, which has the nature of solid in an arbitrary temperature range, and a liquid oil, which has the nature of liquid in the temperature range, which mixture has been hardened in the presence of an oil-and-fat hardening agent containing cellulose.

22. A method of producing a solid oil-and-fat-containing composition, comprising hardening a liquid oil-and-fat mixture a solid fat, which has the nature of solid in an arbitrary temperature range, and a liquid oil, which has the nature of liquid in the temperature range, in the presence of an oil-and-fat hardening agent containing cellulose.

23. A method of adjusting a texture and/or a property of a solid oil-and-fat-containing composition comprising a solid fat, which is solid at a specific temperature within a range of from -20°C to 40°C, and a liquid oil, which is liquid at the specific temperature, said method comprising:
hardening a liquid oil-and-fat mixture, which contains the solid fat and the liquid oil, in the presence of an oil-and-fat hardening agent containing cellulose, and
adjusting the percentage of the solid fat in the liquid oil-and-fat mixture and/or the percentage of the cellulose to the liquid oil-and-fat mixture.
